(19) Europäisches Patentamt
European Patent Office
Office européen des brevets

(11) **EP 2 178 968 B1**

(12) **EUROPEAN PATENT SPECIFICATION**

(45) Date of publication and mention
of the grant of the patent:
**14.09.2016 Bulletin 2016/37**

(51) Int Cl.:
***C08L 23/02*** (2006.01)    ***C08L 23/04*** (2006.01)
***C08L 23/10*** (2006.01)

(21) Application number: **08771160.2**

(86) International application number:
**PCT/US2008/067084**

(22) Date of filing: **16.06.2008**

(87) International publication number:
**WO 2009/020706 (12.02.2009 Gazette 2009/07)**

(54) **PLASTICIZED POLYOLEFIN COMPOSITIONS**

WEICHGEMACHTE POLYOLEFINZUSAMMENSETZUNGEN

COMPOSITIONS DE POLYOLÉFINE PLASTIFIÉE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **07.08.2007  US 963861 P**

(43) Date of publication of application:
**28.04.2010  Bulletin 2010/17**

(73) Proprietor: **ExxonMobil Chemical Patents Inc.**
**Baytown, TX 77520 (US)**

(72) Inventors:
• **CHAPMAN, Bryan, R.**
**Annandale, NJ 08801 (US)**
• **WU, Margaret, M.**
**Skillman, NJ 08558 (US)**
• **LI, Wen**
**Houston, TX 77059 (US)**
• **TSE, Mun, Fu**
**Seabrook, TX 77586 (US)**

(74) Representative: **Mareschal, Anne et al**
**ExxonMobil Chemical Europe Inc.**
**IP Law Europe**
**Hermeslaan 2**
**1831 Machelen (BE)**

(56) References cited:
**EP-A- 1 550 693**       **EP-A- 1 717 269**
**WO-A-03/020856**        **DE-A- 4 404 082**
**US-A1- 2004 106 723**   **US-A1- 2006 135 699**

Description

## FIELD OF THE INVENTION

The present invention relates to plasticized polyolefins comprising a polyolefin and a polyalphaolefin oligomer plasticizer.

## BACKGROUND OF THE INVENTION

Polyolefins are useful in any number of everyday articles. However, one drawback to many polyolefins, especially polypropylene homopolymers and copolymers, is their relatively high glass transition temperature ($T_g$). This characteristic makes the materials brittle, especially at low temperatures. Another drawback to many polyolefins is the need to use very high molecular weights to achieve adequate physical properties. This characteristic makes the materials difficult to process, due to high melt viscosities.

Given that there is a desire to easily fabricate articles that meet increasingly stringent performance requirements a broad range of temperatures, there is a need for a way to improve the physical properties of a polyolefin while also improving upon its processibility. In particular, it would be advantageous to provide a polymer possessing improved low-temperature toughness without sacrificing other advantageous traits. It is also desirable for any modification of the polyolefin to belong-lived, particularly in a way that allows the polyolefin to maintain its properties upon exposure to elevated temperatures. One way to modify a polyolefin to achieve these goals is by changing its glass transition behavior, especially its $T_g$, by plasticizing it with a material of low molecular weight and yet low volatility.

Addition of a plasticizer to a polyolefin is known to improve such properties as impact strength and processibility. For example, U.S. Patent Nos. 4,960,820, 4,132,698, and 3,201,364; International Patent Publication Nos. WO 02/31044 and WO 01/18109; and European Patent Publication No. EP 0300689 disclose blending of polyolefins and elastomers with plasticizers, such as mineral oils which contain aromatic groups, and high (greater than - 20°C) pour point compounds. However, these compounds are often not permanently retained by the polyolefin, resulting in blooming and/or loss of a plasticizing effect, and impact strength is often not improved.

Two critical performance parameters for any plasticizer are its ability to depress the $T_g$ of the polymer and its permanence in the polymer. A lower $T_g$ improves the toughness of the polymer, in particular its low temperature impact toughness and the ductile-to-brittle transition, whereas a high permanence ensures that the plasticization effect is retained over the life of the product. Unfortunately, the molecular weight of the plasticizer tends to have a conflicting influence on these parameters, with a reduction in the number-average molecular weight ($M_n$) improving the plasticization efficiency (i.e., decreasing the plasticizer $T_g$ since $T_g$ is inversely proportional to $M_n$), but reducing permanence. Thus what is needed is a way to lower the $T_g$ of a plasticizer without lowering its molecular weight. Another way to look at this objective is to minimize the pour point of the plasticizer for a given kinematic viscosity or flash point.

One class of materials that have shown attractive properties as polyolefin plasticizers are polyalphaolefins (PAOs), namely oligomers of olefins having 5 or more carbon atoms (in combination, in some cases, with a limited amount of olefins with 2 to 4 carbon atoms) since these materials provide a useful balance of low pour point (and hence $T_g$) and high permanence.

For example, US 2004/054040 and WO 2004/014997 disclose plasticized polyolefin compositions comprising from 99.9 to 60 wt% polyolefin and from 0.1 to 40 wt% of a non-functionalized plasticizer; wherein the non-functionalized plasticizer comprises a $C_6$ to $C_{200}$ paraffin having a pour point of less than -5°C, and conveniently comprises a PAO having a weight average molecular weight (Mw) in the range of 100 to 20,000 g/mol and a kinematic viscosity at 100°C (KV100°C) in the range of 0.1 to 3000 cSt.

In addition, US 2004/106723 and WO 2004/014998 disclose plasticized polyolefin compositions comprising one or more polyolefins and one of more non-functionalized plasticizers, where the non-functionalized plasticizers have a KV100°C of 10 cSt or more and a viscosity index (VI) of 100 or more, and conveniently comprise oligomers of $C_5$ to $C_{14}$ olefins.

US 4,536,537 discloses polypropylene compositions that comprise LLDPE having a density of 0.912 to 0.935 g/cm³ or polybutene and PAO having a kinematic viscosity at 38°C of about 2 to 6 cSt; those with viscosity greater than about 2 cSt are reported to "not work" (col 3, ln 12).

WO 98/0440411 discloses blend compositions that comprise a chlorine-free polyolefin and PAO having a KV100°C of about 4 to 8 cSt for a sheet-like structure, especially a floor covering.

WO 2002/018487 and WO 2003/048252 disclose polypropylene compositions that comprise 10 to 30 wt% of vulcanized or unvulcanized polyolefin elastomers, especially EPDM- or styrene-ethylene-butene-styrene (SEBS) block-copolymers, and PAO having a KV 100°C of about 4 to 8 cSt.

US 4,645,791, JP 07-292167, EP 0 315 363, and WO 2002/031044 all disclose PAO in EPDM compositions.

JP 56-095938 discloses polypropylene compositions that comprise olefin oligomer plasticizers mixed with polyolefin granules.

US 6,639,020 and US 6,916,882 disclose low molecular weight copolymers of ethylene and one or more alpha-olefin as polyolefin plasticizers.

However, PAOs such as those disclosed as polyolefin plasticizers in the prior art are typically produced by a synthesis approach that involves olefin isomerization, and so results in the oligomers having an irregular branching architecture. According to the present invention, it has now been found that PAOs having a regular branching architecture, namely with one branch on every other carbon atom (or nearly so), exhibit lower pour points at the same kinematic viscosity and narrower molecular weight distributions than conventional irregularly branched PAO oligomers. As a result the regularly branched materials show an improved combination of plasticization efficiency and permanence when used as plasticizers for polyolefins.

## SUMMARY OF THE INVENTION

This invention relates to a polyolefin composition comprising a) 60 to 99 wt% of one or more polyolefin polymers and b) 1 to 40 wt% of a regularly branched PAO ("rbPAO") based on the total weight of the polyolefin polymer(s) and the rbPAO, wherein the rbPAO comprises oligomers of one or more $C_2$ to $C_{20}$ alpha-olefins said rbPAO having i) a kinematic viscosity at 100°C ("KV 100°C") of 3 to 3000 cSt; ii) a Branching Irregularity Index ("BII") of 0.40 or less, where BII = $([C_1]+[C_2])/[C_{3+}]$, where $[C_1]$ is the aggregate concentration of any vinylidene and vinyl olefins present divided by 2 plus the concentration of methyl branches, $[C_2]$ is the concentration of ethyl branches, $[C_{3+}]$ is the concentration of propyl and longer branches in the PAO, as determined by $^{13}$C NMR, relative to the molar concentration over all PAO molecules in a sample; iii) a molar-average carbon number ("$C_{LAO}$") of the alpha-olefin of 6 to 14; and iv) a Mw/Mn of less than $\{0.525 + 0.625[\log(KV100°C)]\}$, where KV100°C is measured in cSt, provided that the $M_w/M_n$ of the rbPAO is also less than 2.3.

## BRIEF DESCRIPTION OF THE FIGURES

Figure 1 is a plot of Branching Irregularity Index vs $M_n$ demonstrating the theoretical relationship for a PAO with a regular branching architecture and $C_{LAO}$ of 8, 10, or 12 made from $C_5$ or greater LAO(s).

Figure 2 is a plot of $M_w/M_n$ vs KV100°C demonstrating a functional division between conventional PAOs and metallocene-catalyzed PAOs with regular branching architecture. The solid line represents Eqn (1); the dashed lines are only meant to guide the eye.

Figure 3 is a plot of pour point vs KV100°C demonstrating a functional lower bound for conventional PAOs with irregular branching architecture. The solid line represents Eqn (2).

## DETAILED DESCRIPTION OF THE INVENTION

The present invention involves addition of a poly(alpha-olefin) or PAO liquid to one or more polyolefins in order to produce a blend with improved properties over the unmodified polyolefin(s). We have found that a PAO with a regular branching architecture is a more efficient polyolefin plasticizer than a PAO with irregular branching architecture.

A detailed description will now be provided. Each of the appended claims defines a separate invention, which for infringement purposes is recognized as including equivalents to the various elements or limitations specified in the claims. Depending on the context, all references below to the "invention" can in some cases refer to certain specific embodiments only. In other cases it will be recognized that references to the "invention" will refer to subject matter recited in one or more, but not necessarily all, of the claims. Each of the inventions will now be described in greater detail below, including specific embodiments, versions and examples, but the inventions are not limited to these embodiments, versions or examples, which are included to enable a person having ordinary skill in the art to make and use the inventions, when the information in this patent is combined with available information and technology.

## Definitions

The following definitions are made for purposes of this invention and the claims thereto.

When a polymer or oligomer is referred to as comprising an olefin, the olefin present in the polymer or oligomer is the polymerized or oligomerized form of the olefin, respectively. The term polymer is meant to encompass homopolymers and copolymers. The term copolymer includes any polymer having two or more different monomers in the same chain, and encompasses random copolymers, statistical copolymers, interpolymers, and (true) block copolymers.

When a polymer blend is said to comprise a certain percentage of a monomer, that percentage of monomer is based on the total amount of monomer units in all the polymer components of the blend. For example if a blend comprises 50 wt% of a polymer which has 20 wt% monomer X, and 50 wt% of a polymer which has 10 wt% monomer X, the blend comprises 15 wt% monomer X. The blend components may be miscible, resulting in a single homogeneous phase, or immiscible, resulting in the presence of two or more morphological phases where each phase comprises a different ratio of the polymers.

A "polymer" has a number-average molecular weight ($M_n$) of 20 kg/mol or more, while an "oligomer" has a $M_n$ of less than 20 kg/mol. Preferably, a polymer has a $M_n$ of 40 kg/mol or more, or 60 kg/mol or more, or 80 kg/mol or more, or 100 kg/mol or more. Preferably, an oligomer has a $M_n$ of less than 15 kg/mol, or less than 10 kg/mol, or less than 5 kg/mol, or less than 4 kg/mol, or less than 3 kg/mol, or less than 2 kg/mol, or less than 1 kg/mol.

A "polyolefin" is a polymer comprising at least 50 mol% of one or more olefin monomers. Preferably, a polyolefin comprises at least 60 mol%, or at least 70 mol%, or at least 80 mol%, or at least 90 mol%, or at least 95 mol%, or 100 mol% of one or more olefin monomers. Preferably the olefin monomers are selected from $C_2$ to $C_{20}$ olefins, or $C_2$ to $C_{16}$ olefins, or $C_2$ to $C_{10}$ olefins. More preferably the olefin monomers are selected from ethylene, propylene, 1-butene, 1-hexene, and 1-octane. Polyolefins may also comprise up to 50 mol% of one or more diene monomers.

An "isotactic" polyolefins has at least 10% isotactic pentads, a "highly isotactic" polyolefin has at least 50% isotactic pentads, and a "syndiotactic" polyolefin has at least 10% syndiotactic pentads, according to analysis by $^{13}$C NMR. Preferably isotactic polymers have at least 20% (preferably at least 30%, preferably at least 40%) isotactic pentads. A polyolefin is "atactic" if it has less than 5% isotactic pentads and less than 5% syndiotactic pentads.

A "liquid" is defined to be a material that flows at room temperature, having a pour point of less than +20°C and a kinematic viscosity at 25°C of 30,000 cSt or less.

The term "paraffin" refers to saturated hydrocarbons, including normal paraffins, branched paraffins, isoparaffins, cycloparaffins, and blends thereof. More specifically, the following terms have the indicated meanings: "isoparaffins" are branched chain-type saturated hydrocarbons (i.e., branched alkanes, having at least one tertiary or quaternary carbon atom), which possess at least one $C_1$ to $C_{18}$ (more commonly $C_1$ to $C_{10}$) alkyl branch along at least a portion of each chain; "normal paraffins" are un-branched chain-type saturated hydrocarbons (i.e., normal alkanes); and "cycloparaffins" (also known as "naphthenes") are cyclic (mono-ring and/or multi-ring) saturated hydrocarbons and branched cyclic saturated hydrocarbons. Unsaturated hydrocarbons include "alkenes" (olefins, diolefins, etc.) and "aromatics" (unsaturated mono-ring and/or multi-ring cyclic moieties, including branched cyclic unsaturated hydrocarbons).

The nomenclature "$C_x$" where x is an integer means there are "x carbons" in the compound; for example, a "$C_5$ paraffin" is a paraffin with 5 carbon atoms.

The term "regularly branched PAO" shall refer to all PAOs having a BII of 0.40 or less. The term "irregularly branched PAO" shall refer to all PAOs having a BII of greater than 0.40.

The term "mineral oil" includes any hydrocarbon liquid of lubricating viscosity (i.e., a kinematic viscosity at 100°C of 1 cSt or more) derived from petroleum crude oil and subjected to one or more refining and/or hydroprocessing steps (such as fractionation, hydrocracking, dewaxing, isomerization, and hydrofinishing) to purify and chemically modify the components to achieve a final set of properties. Such "refined" oils are in contrast to "synthetic" oils, which are manufacture by combining monomer units using catalysts and/or heat.

The term "substantially absent" means that the compounds in question are not added deliberately to the compositions and, if present, are present at less than 1 wt%, based upon the total weight of the composition. Preferably, the compounds in question are present at less than 0.5 wt%, or less than 0.1 wt%, or less than 0.05 wt%, or less than 0.01 wt%, or less than 0.001 wt%, based upon the total weight of the composition.

For purpose of this invention and the claims thereto, unless otherwise noted, physical and chemical properties described herein are measured using the test methods described under the Experimental Methods section.

## PAO Component

The polyolefin compositions of the present invention include at least one regularly branched PAO component.

In general, PAOs are high purity hydrocarbons with a fully paraffinic structure and a high degree of side-chain branching. They are typically produced by oligomerization of alpha-olefins (i.e., 1-olefins) in the presence of a Friedel-Crafts (Lewis acid) catalyst (for example, $AlCl_3$, $BF_3$, or a coordination complex such as ethylaluminum sesquichloride + $TiCl_4$), as disclosed in US 4,365,105 to Gulf Research and US 4,436,948 to Phillips Petroleum. This synthesis approach yields products with irregular branching architectures. Such conventional PAOs are described in, for example, U.S. Patents 3,149,178; 4,827,064; 4,827,073; 5,171,908; and 5,783,531 and in Synthetic Lubricants and High-Performance Functional Fluiils (Leslie R. Rudnick & Ronald L. Shubkin, ed. Marcel Dekker, Inc. 1999), p. 3-52.

Irregularly branched PAOs are commercially available from ExxonMobil Chemical (USA), ChevronPhillips Chemical (USA), Chemtura (USA), Ineos (UK), and Neste Oil (Finland). Representative examples are described in the following tables. Conventional low viscosity PAOs have a KV 100°C of 10 cSt or less, and generally have a VI less than 150 and a $M_w/M_n$ of less than 1.2. Conventional high viscosity PAOs have a KV100°C of greater than 10 cSt, and generally have a $M_w/M_n$ greater than 1.2 and that increases with increasing KV100°C. Both types of PAO have a Branching Irregularity Index of greater than 0.4 typically.

**Commercial Low Viscosity Irregularly Branched PAOs** *(typical properties)*

| KV100°C, cSt | VI | Pour Point, °C | Specific gravity | Flash Point, °C | $M_w/M_n$ |
|---|---|---|---|---|---|
| ExxonMobil Chemical (SpectraSyn™ PAOs) | | | | | |
| 4 | 126 | -66 | 0.820 | 220 | 1.01 |
| 6 | 138 | -57 | 0.827 | 246 | 1.04 |
| 8 | 139 | -48 | 0.833 | 260 | 1.04 |
| 10 | 137 | -48 | 0.835 | 266 | 1.05 |
| ChevronPhillips Chemical (Synfluid® PAOs) | | | | | |
| 4 | 124 | -73 | 0.819 | 219 | |
| 5 | 145 | -50 | 0.824 | 246 | |
| 6 | 135 | -61 | 0.828 | 238 | |
| 7 | 145 | -43 | 0.831 | 260 | |
| 8 | 138 | -57 | 0.833 | 257 | |
| 9 | 146 | -42 | 0.834 | 258 | |
| Ineos(Durasyn® PAOs) | | | | | |
| 4 | 123 | -65 | 0.820 | 204 | |
| 6 | 138 | -60 | 0.827 | 225 | |
| 8 | 138 | -50 | 0.832 | 245 | |
| Neste Oil (Nexbase® PAOs) | | | | | |
| 4 | 128 | -69 | 0.820 | 223 | |
| 6 | 138 | -63 | 0.828 | 244 | |
| 8 | 137 | -60 | 0.832 | 260 | |

**Commercial High Viscosity Irregularly Branched PAOs** *(typical properties)*

| KV100°C, cSt | VI | Pour Point, °C | Specific gravity | Flash Point, °C | $M_w/M_n$ |
|---|---|---|---|---|---|
| ExxonMobil Chemical (SpectraSyn™ PAOs) | | | | | |
| 40 | 147 | -36 | **0.850** | 281 | 1.6 |
| 100 | 170 | -30 | **0.853** | 283 | 2.5 |
| ChevronPhillips Chemical (Synfluid® PAOs) | | | | | |
| 25 | 155 | -45 | 0.850 | 270 | |
| Chemtura (Synton® PAOs) | | | | | |
| 40 | | -30 | 0.842 | 280 | |
| 100 | | -24 | 0.847 | 301 | |

PAOs useful in the present invention have a regular branching architecture. Such PAOs are disclosed in, for example, WO 2007/11459, WO 2007/11462, and WO 2007/11973 to ExxonMobil, US 6,858,767 to Uniroyal, EP 1 442 104 to Pennzoil-Quaker State, and US 7,129,306 to Crompton, in which single-site catalysts are used in the synthesis. In the present invention, regularly branched PAOs made using single-site coordination catalyst, such as a metallocene catalyst or a constrained geometry catalyst, are preferred. PAOs prepared using a metallocene catalyst system are particularly preferred. Suitable single-site coordination catalyst systems include the Exxpol™ catalyst technology from ExxonMobil Chemical, the Insite™ catalyst technology from Dow Chemical, and the Versipol® technology from DuPont. However, useful regularly branched PAOs can be made by any suitable means, including through the use of Ziegler-Natta catalysts (as disclosed in European Polymer Journal, Vol. 41, p. 2909, 2005), chrome catalysts (as disclosed in US 4,827,064 to Mobil), or reduced valence state metal oxide catalyst from Group 6 of the Periodic Table.

Regularly branched PAOs made using a chrome catalyst are commercially available from ExxonMobil Chemical. Representative examples are described in the following table. These PAOs have a $M_w/M_n$ of greater than 2 and a Branching Irregularity Index of less than 0.4 typically.

**Commercially Available Regularly Branched PAOs** *(typical properties)*

| KV 100°C, cSt | VI | Pour Point, °C | Specific gravity | Flash Point, °C | $M_w/M_n$ |
|---|---|---|---|---|---|
| ExxonMobil Chemical (SpectraSyn™ PAOs) | | | | | |
| 150 | 218 | -33 | 0.850 | > 265 | 2.3 |
| 300 | 241 | -27 | 0.852 | > 265 | 2.4 |
| 1,000 | 307 | -18 | 0.855 | > 265 | 2.6 |

In one or more embodiments, the PAO comprises $C_{15}$ to $C_{1500}$, or $C_{20}$ to $C_{1000}$, or $C_{30}$ to $C_{800}$, or $C_{35}$ to $C_{400}$, or $C_{40}$ to $C_{250}$ oligomers (such as dimers, trimers, etc.) of one or more alpha-olefins (also known as 1-olefns) with carbon numbers of $C_2$ to $C_{24}$, or $C_3$ to $C_{20}$, or $C_5$ to $C_{18}$, or $C_6$ to $C_{14}$, or $C_8$ to $C_{12}$. Preferably, at least one of the alpha-olefins is a linear alpha-olefins (LAO); more preferably, all the alpha-olefins are LAOs. Suitable LAOs include ethylene, propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, and blends thereof. Preferably, $C_2$, $C_3$, and $C_4$ alpha-olefins (i.e., ethylene, propylene and 1-butene and/or isobutylene) are present in the PAO oligomers at an average concentration of 30 wt% or less, or 20 wt% or less, or 10 wt% or less, or 5 wt% or less; more preferably, $C_2$, $C_3$, and $C_4$ alpha-olefins are not present in the PAO oligomers.

In one or more embodiments, the PAO comprises oligomers of two or more $C_2$ to $C_{24}$, or $C_3$ to $C_{20}$ LAOs, to make 'bipolymer' or 'terpolymer' or higher-order copolymer combinations. Other embodiments involve oligomerization of a mixture of LAOs selected from $C_6$ to $C_{18}$ LAOs with even carbon numbers, preferably a mixture of two or three LAOs selected from 1-hexene, 1-octene, 1-decene, and 1-dodecene.

In one or more embodiments, the PAO comprises oligomers of a single alpha-olefin species having a carbon number of 5 to 20, or 6 to 18, or 8 to 12, or 10. In other embodiments, the PAO comprises oligomers of mixed (i.e., two or more) alpha-olefin species, wherein each alpha-olefin species has a carbon number of 5 to 20, or 6 to 14, or 8 to 12. In other embodiments, the PAO comprises oligomers of mixed alpha-olefin species wherein the molar-average carbon number ("$C_{LAO}$") is 6 to 14, or 7 to 13, or 8 to 12, or 9 to 11.

In one or more embodiments, the PAO has a repeat unit formula of $[CHR-CH_2]$ where R is a $C_3$ to $C_{18}$ saturated hydrocarbon moiety. In certain embodiments, R is constant for all oligomers. In other embodiments, there is a range of R substituents selected from $C_3$ to $C_{18}$ saturated hydrocarbon moieties. Preferably, R is linear, i.e.,
R is

$$-(CH_2)_nCH_3,$$

where n is 1 to 17, or 2 to 15, or 3 to 13, or 5 to 11. Optionally, R can contain one methyl or ethyl branch, i.e.,
R is

$$-(CH_2)_m[CH(CH_3)](CH_2)_zCH_3$$

or
R is

$$-(CH_2)_x[CH(CH_2CH_3)](CH_2)_yCH_3,$$

where (m + z) is 1 to 15, or 1 to 9, or 3 to 7, and (x + y) is 1 to 14, or 1 to 8, or 2 to 6. Preferably m > z; m is 0 to 15, or 2 to 15, or 3 to 12, or 4 to 9; and n is 0 to 10, or 1 to 8, or 1 to 6, or 1 to 4. Preferably x > y; x is 0 to 14, or 1 to 14, or 2 to 11, or 3 to 8; and y is 0 to 10, or 1 to 8, or 1 to 6, or 1 to 4.

In one or more embodiments, the PAO has a Branching Irregularity Index (BII) of 0.40 or less, or 0.35 or less, or 0.30 or less, where

$$BII = \frac{[C_1] + [C_2]}{[C_{3+}]}$$

and $[C_1]$ is the aggregate concentration of any vinylidene and vinyl olefins present divided by two plus the concentration of methyl branches, $[C_2]$ is the concentration of ethyl branches, $[C_{3+}]$ is the concentration of propyl and longer branches in the PAO, the molar concentration over all PAO molecules in a sample. The relative populations of methyl, ethyl, and propyl or longer branches in a paraffin is determined using $^{13}$C NMR.

For a PAO with regular branching architecture made from $C_5$ or larger LAOs, the theoretical relationship between BII and molecular weight can be expressed as:

$$BII_{predicted} = \frac{14 C_{LAO}}{M_n}$$

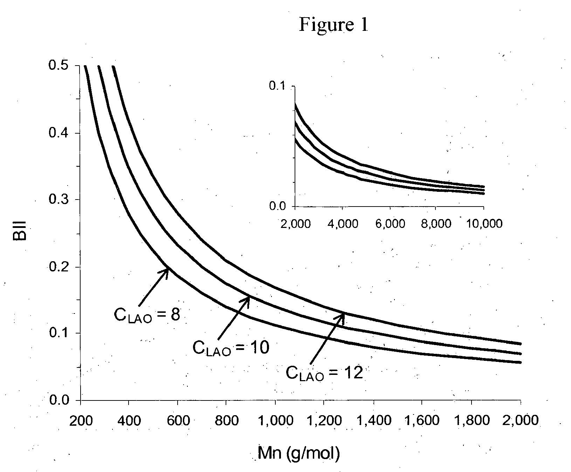

where $M_n$ is the number-average molecular weight in g/mol and $C_{LAO}$ is the molar-average carbon number of the LAO(s) incorporated into the PAO. This prediction assumes one methyl branch per molecule due to an end-group and the number of propyl or longer branches is given by the average degree of polymerization. This relationship is depicted in Figure 1 for $C_{LAO}$ values of 8, 10, and 12. For PAOs made by a chemistry that results in a regular branching architecture, BII decreases with increasing molecular weight and therefore with increasing KV100°C. For PAOs made by a chemistry that results in an irregular branching architecture, BII will not follow this trend and should be more or less independent of KV100°C.

The PAO can be atactic, isotactic, or syndiotactic. In one or more embodiments, the PAO has essentially the same population of meso and racemic diads, on average, making it atactic. In one or more embodiments, the PAO has more than 50%, or more than 60%, or more than 70%, or more than 80%, preferably more than 90% meso triads (i.e., [mm]) as measured by $^{13}$C NMR. In one or more embodiments, the PAO has more than 50%,or more than 60%, or more than 70%, or more than 80%, preferably more than 90% racemic triads (i.e., [rr]) as measured by $^{13}$C NMR. In one or more embodiments, the ratio of meso to racemic diads "[m]/[r]" determined by $^{13}$C NMR is between 0.9 and 1.1. In one or more embodiments, [m]/[r] is greater than 1.0 and [m]/[r] is less than 1.0 in yet another embodiment. Preferably, the repeat units are arranged in a head-to-tail fashion with minimal head-to-head connections.

The PAO component may be a blend of one or more distinct PAOs with different compositions and/or different physical properties (e.g., kinematic viscosity, pour point, and/or viscosity index).

In one or more embodiments, the PAO or blend of PAOs has a number-averaged molecular weight ($M_n$) of from 300 to 15,000 g/mol, or 400 to 12,000 g/mol, or 500 to 10,000 g/mol, or 600 to 8,000 g/mol, or 800 to 6,000 g/mol, or 1,000 to 5,000 g/mol.

In one or more embodiments, the PAO or blend of PAOs has a molecular weight distribution as characterized by the ratio of the weight- and number-averaged molecular weights ($M_w/M_n$) of less than 2.3, or less than 2.1, or less than 2.0, or less than 1.9, or less than 1.8. In other embodiments, the PAO or blend of PAOs has a $M_w/M_n$ of 1 to 2.5, preferably 1.1 to 2.3, or 1.1 to 2.1, or 1.1 to 1.9. The PAO or blend of PAOs has a

$$M_w/M_n < 0.525 + 0.625[\log(KV100°C)] \qquad\qquad Eqn\ (1)$$

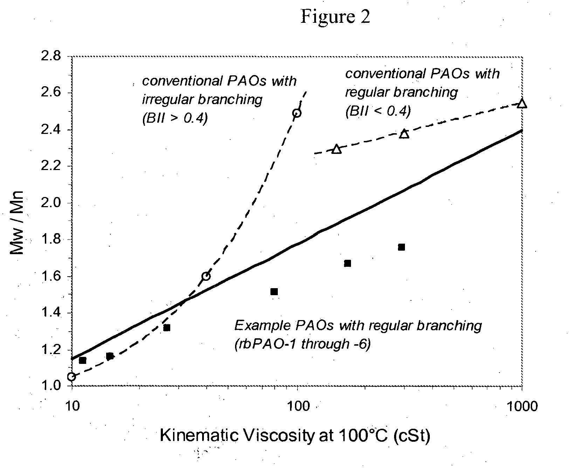

where KV100°C is measured in cSt. Conventional PAOs with KV100°C of at least 10 cSt generally will not satisfy Eqn (1), as shown in Figure 2. In other embodiments, the PAO or blend of PAOs has a $M_w/M_n$ of less than 0.5 + 0.6[log(KV100°C)].

The PAO or blend of PAOs has a KV100°C of 3 cSt or more, or 4 cSt or more, or 5 cSt or more, or 6 cSt or more, or 8 cSt or more, or 10 cSt or more, or 20 cSt or more, or 30 cSt or more, or 40 cSt or more, or 50 cSt or more, or 100 or more, or 150 cSt or more, or 300 cSt or more. The PAO has a KV100°C of 3 to 3,000 cSt, or 4 to 1,000 cSt, preferably 6 to 300 cSt, or 6 to 150 cSt, or 8 to 150 cSt, or 8 to 100 cSt, or 8 to 40 cSt. In other embodiments, the PAO or blend of PAOs has a KV100°C of 10 to 1000 cSt, or 10 to 300 cSt, or 10 to 150 cSt, or 10 to 100 cSt. In other embodiments, the PAO or blend of PAOs has a KV100°C of 4 to 8 cSt. In other embodiments, the PAO or blend of PAOs has a KV100°C of 25 to 300 cSt, or 40 to 300 cSt, or 40 to 150 cSt. In other embodiments, the PAO or blend of PAOs has a KV100°C of 50 to 500 cSt.

In one or more embodiments, the PAO or blend of PAOs has a Viscosity Index (VI) of 120 or more, or 130 or more, or 135 or more, or 140 or more, or 145 or more, or 150 or more, or 155 or more, or 160 or more, or 170 or more, or 180 or more, or 190 or more, or 200 or more, or 250 or more, or 300 or more, preferably 120 to 350, or 130 to 250. Conventional PAOs with KV100°C of 10 cSt or less generally have a VI of less than 150. High VI of the PAO is advantageous for two reasons. For a given viscosity at room temperature, a higher VI means the PAO has a higher viscosity at high temperature where polymer processing takes place (e.g., 200°C), so blending the POA into the polymer is facilitated (it is well known that homogeneous mixing of materials with severely mismatched viscosities such as a high viscosity polymer and a low viscosity fluid is difficult). On the other hand, for a given viscosity at high temperature (e.g., 200°C), a higher VI means the PAO has a lower viscosity at room temperature, so the PAO is easier to pump. In certain embodiments, the PAO or blend of PAOs has a KV100°C of 10 cSt or less and a VI of 150 or more. In other embodiments, the PAO or blend of PAOs has a KV100°C of 150 cSt or less, preferably between 10 and 150 cSt, and a VI of greater than $105(KV100°C)^{0.13}$ where KV100°C is measured in cSt.

In one or more embodiments, the PAO or blend of PAOs has a pour point of -20°C or less, or -25°C or less, or -30°C or less, or -35°C or less, or -40°C or less, or -50°C or less, preferably -20 to -80°C, or -30 to -70°C. In other embodiments, the PAO or blend of PAOs has a KV100°C of less than 150 cSt and

$$\text{pour point (°C)} < -75 + 22\log(KV100°C) - \frac{125}{(KV100°C)^{1.6}} \qquad \text{Eqn (2)}$$

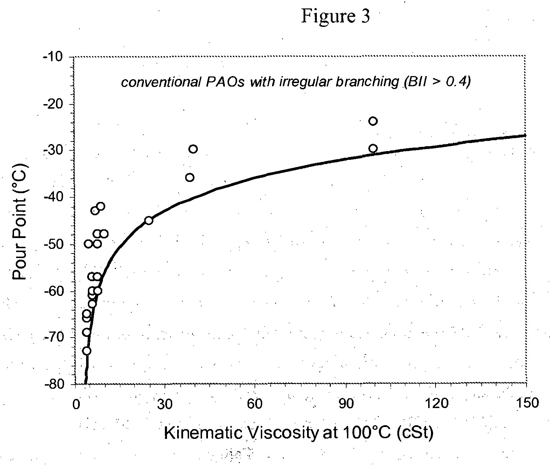

where KV100°C is measured in cSt. Preferably, the PAO also has a BII of less than 0.40, or less than 0.35, or less than 0.30. Conventional PAOs with irregular branching will generally not satisfy Eqn (2), as shown in Figure 3. In other embodiments, the PAO or blend of PAOs has a KV100°C of 150 cSt or more and a pour point of -25°C or less.

In one or more embodiments, the PAO or blend of PAOs has a glass $T_g$ of -40°C or less, or -50°C or less, or -60°C or less, or -70°C or less, or -80°C or less, preferably -50 to -120°C, or -60 to -100°C, or -70 to -90°C. In other embodiments, the PAO has a KV100°C of less than 150 cSt and a

$$T_g \text{ (°C)} < -72 - \frac{120}{KV100°C} \qquad \text{Eqn (3)}$$

where KV100°C is measured in cSt. Preferably, the PAO also has a BII of less than 0.40, or less than 0.35, or less than 0.30. Conventional PAOs with irregular branching will generally not satisfy Eqn (3).

In one or more embodiments, the PAO or blend of PAOs has a flash point of 200°C or more, or 210°C or more, or 220°C or more, or 230°C or more, preferably between 240°C and 290°C.

In one or more embodiments, the PAO or blend of PAOs has a specific gravity (15.6°C) of 0.86 or less, or 0.855 or less, or 0.85 or less, or 0.84 or less.

Particularly advantageous PAOs and blends of PAOs are those having a) a flash point of 200°C or more, preferably 210°C or more, or 220°C or more, or 230°C or more; and b) a pour point less than -20°C, preferably less than -25°C, or less than -30°C, or less than -35°C, or less than -40°C and/or c) a KV100°C of 10 cSt or more, preferably 35 cSt or more, or 40 cSt or more, or 60 cSt or more.

Further advantageous PAOs or blends of PAOs have a) a KV100°C of preferably at least 4 cSt, or at least 6 cSt, or at least 8 cSt, or at least 10 cSt; b) a VI of at least 120, preferably at least 130, or at least 140, or at least 150; c) a pour point of -10°C or less, preferably -20°C or less, or -30°C or less, or -40°C or less; and d) a specific gravity (15.6°C) of 0.86 or less preferably 0.855 or less, or 0.85 or less, or 0.84 or less.

Further advantageous PAOs or blends of PAOs have a) a BII of preferably less than 0.35, or less than 0.30; b) a $M_w/M_n$ of less than 0.525 + 0.625[log(KV100°C)], preferably less than 0.5 + 0.6[log(KV100°C)], where KV100°C is measured in cSt.

Advantageous blends of PAOs include blends of two or more PAOs where the ratio of the highest KV100 °C to the lowest KV100°C is at least 1.5, preferably at least 2, or at least 3, or at least 5. Advantageous blends of PAO also include blends of two or more PAOs where: at least one PAO has a KV100°C of 300 cSt or more and at least one PAO has a KV100°C of less than 300 cSt; or at least one PAO has a KV100°C of 150 cSt or more and at least one PAO has a KV100°C of less than 150 cSt; or at least one PAO has a KV100°C of 100 cSt or more and at least one PAO has a KV100°C of less than 100 cSt; or at least one PAO has a KV100°C of 40 cSt or more and at least one PAO has a KV100°C of less than 40 cSt; or at least one PAO has a KV100°C of 10 cSt or more and at least one PAO has a KV100°C of less than 10 cSt.

**Polyolefin Component**

The PAOs described herein are blended with at least one polyolefin to prepare the plasticized compositions of this invention. Preferred polyolefins include polyethylene homopolymer, polypropylene homopolymers, polybutene homopolymers, ethylene-propylene copolymers, ethylene-butene copolymers, ethylene-hexene copolymers, ethylene-octene copolymers, propylene-butene copolymers, propylene-hexene copolymers, propylene-octene copolymers, and copolymers of one or more olefins selected from $C_2$ to $C_4$ olefins with one or more comonomers selected from diolefins and oxygen-containing olefins (examples being ethylene-propylene-diene and ethylene-vinyl acetate copolymers). The polyolefin component may be a blend of one or more polyolefins, or a blend of polymers comprising at least 50 wt% of one or more polyolefins.

In certain embodiments, the polyolefin is selected from the general class of polyolefins known as "polyethylene" (i.e., ethylene homopolymers, ethylene copolymers, and blends thereof). These include plastomers having a density of less than 0.91 $g/cm^3$; low density polyethylene having a density of more than 0.91 $g/cm^3$ to less than 0.94 $g/cm^3$ (which further includes copolymers made using a heterogeneous catalysis process, often identified as linear low density polyethylene or LLDPE, and homopolymers or copolymers made using a high-pressure/free radical process, often identified as LDPE); and high density polyethylene (HDPE) having a density of 0.94 $g/cm^3$ or more.

A polyethylene material comprises at least 50 mole%, or 60 mol%, or at least 70 mol%, or at least 80 mol%, or at least 90 mol%, or at least 95 mol%, or 100 mole% ethylene units. Polyethylene copolymers may be random copolymers, statistical copolymers, block copolymers, and blends thereof. Comonomers are preferably selected from $C_3$ to $C_{20}$ alpha-olefins, or from $C_3$ to $C_{10}$ alpha-olefins, or from 1-butene, 1-hexene, and 1-octene; and preferably are present from 0.1 to 20 wt%, or from 0.5 to 10 wt%, or from 1 to 5 wt%, or from 2 to 35 wt%, or from 5 to 30 wt%, or from 15 to 25 wt%. Polyethylene copolymers may comprise up to 50 mol% diene.

Useful polyethylene blends may be physical blends or in situ blends of more than one type of polyethylene or blends of polyethylene with other polymers, especially other polyolefins, where polyethylene comprises at least 50 wt%, or at least 60 wt%, or at least 70 wt%, or at least 80 wt%, or at least 90 wt% of the blend.

In other embodiments, the polyolefin is selected from the general class of polyolefins known as "polypropylene" (i.e., propylene homopolymers, copolymers, and blends thereof). These include isotactic polypropylene (iPP), highly isotactic polypropylene, syndiotactic polypropylene (sPP), homopolymer polypropylene (hPP, also called propylene homopolymer or homopolypropylene), so-called random copolymer polypropylene (RCP, also called propylene random copolymer, which comprise a copolymer of propylene and 1 to 10 wt% of an olefin chosen from ethylene and $C_4$ to $C_8$ 1-olefins), and impact copolymer polypropylene (ICP, also called heterophasic or biphasic polypropylene copolymers, which comprise a blend of hPP or RCP with low-crystallinity or amorphous ethylene-propylene or ethylene-propylene-diene copolymer).

A polypropylene material comprises at least 50 mol%, or 60 mol%, or at least 70 mol%, or at least 80 mol%, or at least 90 mol%, or at least 95 mol%, or 100 mol% propylene units. Polypropylene copolymers may be random copolymers, statistical copolymers, block copolymer, impact copolymers, and blends thereof. Comonomers are preferably selected from ethylene and $C_4$ to $C_{20}$ alpha-olefins, or from ethylene and $C_4$ to $C_{10}$ alpha-olefins, or from ethylene, 1-butene, 1-hexene, and 1-octene; and preferably are present from 0.1 to 20 wt%, or from 1 to 10 wt%, or from 2 to 5 wt%, or from 2 to 35 wt%, or from 5 to 30 wt%, or from 15 to 25 wt%. Polypropylene copolymers may also comprise up to 50 mol% diene:

The polypropylene may have any level of isotacticity or syndiotacticity, and may be atactic polypropylene (having less than 10% isotactic and less than 10% syndiotactic pentads), isotactic polypropylene (having at least 10% isotactic pentads), highly isotactic polypropylene (having at least 50% isotactic pentads), syndiotactic polypropylene (having at least 10% syndiotactic pentads), highly syndiotactic polypropylene (having at least 50% syndiotactic pentads), and blends thereof.

Suitable polypropylene blends may be physical blends or in situ blends of more than one type of polypropylene or blends of polypropylene with other polymers, especially other polyolefins, where polypropylene comprises at least 50 wt%, or at least 60 wt%, or at least 70 wt%, or at least 80 wt%, or at least 90 wt% of the blend. Useful polypropylene blends include impact copolymers (also known as block copolymers in some literature) and blends of a polypropylene with a plastomer.

A typical impact copolymer polypropylene (ICP) contains at least two phases or components, e.g., a thermoplastic (such as a propylene homopolymer) component and an elastomeric (such as a ethylene and/or propylene copolymer) component. The impact copolymer may also comprise three phases such as a PP/EP/PE combination with the PP continuous and a dispersed phase with EP outside and PE inside the dispersed phase particles. These components are usually produced in a sequential polymerization process wherein the thermoplastic (such as a propylene homopolymer) component produced in a first reactor is transferred to a second reactor where the elastomeric (such as a ethylene and/or propylene copolymer) component is produced and incorporated within the matrix of the thermoplastic component. The elastomeric component has rubbery characteristics and provides the desired impact resistance, whereas the thermoplastic component provides overall stiffness. Suitable ICPs may be a so-called reactor (or in-situ) blends or a post reactor (ex-situ) blends.

Other useful polyolefins include homopolymers and copolymers of propylene having a moderate level of crystallinity ($H_m$ of less than 50 J/g) due to stereoregular defects in the propylene sequences and or comonomers. Preferably, these polypropylenes have a ratio of m to r (m/r) of more than 1, where the designation "m" or "r" describes the stereochemistry of pairs of contiguous propylene groups, "m" referring to meso and "r" to racemic.

In other embodiments, the polyolefin is selected from the general glass of polyolefins known as "polybutene" (i.e., butene-1 homopolymers, copolymers, and blends thereof). The homopolymer may be atactic, isotactic, or syndiotactic polybutene, and blends thereof. The copolymer can be a random copolymer, a statistical copolymer, a block copolymer, and blends thereof. Random copolymers include those where the comonomer is selected from ethylene, propylene, 1-hexene, and 1-octene. Blends include impact copolymers, elastomers and plastomers, any of which may be physical blends or in situ blends with the polybutene. Poly(1-butene) homopolymers and 1-butene/ethylene copolymers are commercially available from Basell Polyolefins.

In other embodiments, the polyolefin is selected from the general glass of polyolefins known as "ethylene-propylene (EP) elastomers" which are copolymers of ethylene and propylene and optionally one or more diene monomer(s), and also known in the art as EPM or EPDM elastomers. EP elastomers have little to no crystallinity with a heat of fusion of 20 J/g or less, a density of 0.86 g/cm$^3$ or less, an ethylene content from 35 to 85 mol%, a diene content of 0 to 5 mol%, a minimum propylene content of 15 mol%, and a molecular weight of at least 50 kg/mol.

Suitable polyolefins involve homopolymer or copolymers of one or more olefins selected $C_2$ to $C_{20}$ linear, branched, cyclic, and aromatic-containing monomers, specifically including ethylene, 1-butene, 1-pentene, 1-hexene, 1-heptene, 1-octene, 1-nonene, 1-decene, 1-dodecene, 4-methyl-1-pentene, 3-methyl-1-pentene, 3,5,5-trimethyl-1-hexene, 5-ethyl-1-nonene, vinylcyclohexane, vinylcyclohexene, vinylnorbornene, ethylidene norbornene, cyclopentadiene, cyclopentene, cyclohexene, cyclobutene, vinyladamantane, styrene, alphamethylstyrene, para-alkylstyrenes such as paramethyl styrene, 4-phenyl-1-butene, allyl benzene, vinyltoluenes, vinylnaphthalene, allyl benzene, and indene. For example, the polyolefin may be poly(4-methyl-pentene-1) homopolymer, or a copolymer of 4-methyl-penten-1 and another olefin.

Suitable polyolefins may comprise up to 20 wt%, or up to 10%, or up to 1 wt% diene (i.e., diolefin) monomers. Examples include alpha-omega: diene (i.e., di-vinyl) monomers such as 1,6-heptadiene, 1,7-octadiene, 1,8-nonadiene, 1,9-decadiene, 1,10-undecadiene, 1,11-dodecadiene, 1,12-tridecadiene, and 1,13-tetradecadiene, as well as cyclic dienes such as cyclopentadiene, vinylnorbornene, norbornadiene, ethylidene norbornene, divinylbenzene, and dicyclopentadiene.

Other suitable polyolefins are described in WO 03/040201, WO 03/040095, WO 03/040202, WO 03/040233, and WO 03/040442.

Preferred polyolefins have one or more of the following properties:

1. $M_w$ of 25 to 2,000 kg/mol, or 40 to 1,000 kg/mol, or 90 to 500 kg/mol;
2. $M_w/M_n$ of 1 to 40, or 1.5 to 20, or 1.8 to 10, or 1.9 to 5, or 1.8 to 3;
3. $T_m$ of 80 to 190°C, or 90 to 180°C, or 100 to 160°C, or 30 to 100°C, or 40 to 80°C;
4. $T_g$ of -40°C to 20°C; or -20°C to 10°C, or -10°C to 5°C;
5. $H_m$ of 180 J/g or less, or 20 to 150 J/g, or 40 to 120 J/g;
6. $T_c$ of 15 to 120°C, or 20 to 115°C, or 25 to 110°C, or 60 to 145°C;
7. MI of 0.02 to 800 dg/min, or 0.05 to 500 dg/min, or 0.1 to 100 dg/min, or 0.3 to 50 dg/min, or 0.5 to 35 dg/min;
8. MFR of 0.1 to 2500 dg/min, or 0.3 to 500 dg/min.

The method of making the polyolefin is not critical, as it can be made by slurry, solution, gas phase, high pressure or other suitable processes, and by using catalyst systems appropriate for the polymerization of polyethylenes, such as Ziegler-Natta-type catalysts, chromium catalysts, metallocene-type catalysts, other appropriate catalyst systems or combinations thereof, or by free-radical polymerization. Catalyst systems suitable to make polyethylene are well known in the art; see, for example, ZIEGLER CATALYSTS (Springer-Verlag, 1995) and METALLOCENE-BASED POLYOLEFINS (Wiley & Sons, 2000).

## Composition Ranges

In one or more embodiments, one or more PAO component is present in an amount of from a low of 0.5 wt%, or 1 wt%, or 2 wt%, or 3 wt%, or 4 wt%, or 5 wt%, to a high of 50 wt%, or 45 wt%, or 40 wt%, or 35 wt%, or 30 wt%, or 25 wt%, or 20 wt%, or 15 wt%, or 10 wt%, or 5 wt%, based on total weight of PAO(s) and polyolefin(s), wherein a desirable range can be any combination of any lower wt% limit with any upper wt% limit described herein provided the lower limit is less than the upper limit. In other embodiments, the composition includes at least one PAO in an amount of about 1 to 40 wt%, or 2 to 30 wt%, or 4 to 20 wt%, based on the total weight of the composition.

In one or more embodiments, one or more polyolefin component is present in an amount of from a low of 50 wt%, or 55 wt%, or 60 wt%, or 65 wt%, or 70 wt%, or 75 wt%, or 80 wt%, or 85 wt%, or 90 wt%, or 95 wt% to a high of 99 wt%, or 95 wt%, or 90 wt%, or 85 wt%, or 80 wt%, or 75 wt%, or 70 wt%, or 65 wt%, or 60 wt%, based on total weight of PAO(s) and polyolefin(s), wherein a desirable range can be any combination of any lower wt% limit with any upper wt% limit described herein provided the lower limit is less than the upper limit. In other embodiments, the composition includes at least one polyolefin in an amount of about 60 to 99 wt%, or 70 to 98 wt%, or 80 to 96 wt%, based on the total weight of the composition.

In another embodiment, the compositions comprise less than 20 wt%, or less than 10 wt%, or less than 5 wt%, or less than 1 wt%, or 0 wt%, based upon the weight of the composition, of a liquid copolymer of ethylene and alpha-olefin(s) chosen from propylene, 1-butene, 1-hexene, and 1-octene.

In another embodiment, the compositions comprise less than 20 wt%, or less than 10 wt%, or less than 5 wt%, or less than 1 wt%, or 0 wt%, based upon the weight of the composition, of a liquid homopolymer or copolymer of isoprene and/or butadiene.

In another embodiment, the compositions comprise less than 20 wt%, or less than 10 wt%, or less than 5 wt%, or less than 1 wt%, or 0 wt%, based upon the weight of the composition, of a liquid homopolymer or copolymer of $C_4$ olefin(s) which includes 1-butene, 2-butene, and isobutylene.

**Other Additives**

Additives commonly used in the polyolefin industry to impart certain desirable properties may be present in the polyolefin compositions of the present invention. Such additives are described in Plastics Additive Handbook, 5th Ed.; H. Zweifel, Ed. (Hanser-Gardner, 2001) and include antioxidants (including organic phosphites, hindered amines, and phenolics), stabilizers (including UV stabilizers and other UV absorbers), nucleating agents (including clarifying agents, metal salts such as sodium benzoate, sorbitol derivatives, and metal phosphates), pigments, dyes, color masterbatches, processing aids, waxes, oils, lubricants, surfactants, slip agents (including metal salts of fatty acids such as zinc stearate and fatty acid amides such erucamide), tackifiers, block, antiblock, neutralizers (such as hydro talcite), acid scavengers, anticorrosion agents, cavitating agents, blowing agents, quenchers, antistatic agents, fire retardants, cure or cross linking agents or systems (such as elemental. sulfur, organo-sulfur compounds, organic peroxides, and di- or tri-amines), coupling agents (such as silane), and combinations thereof. The additives may be present in amounts known in the art to be effective, preferably at 0.01 to 10 wt% (100 to 100,000 ppm), or 0.02 to 1 wt% (200 to 10,000 ppm), or 0.025 to 0.5 wt% (250 to 5,000 ppm), or 0.05 to 0.25 wt% (500 to 2,500 ppm), or 0.1 to 5 wt% (1000 to 50,000 ppm), based upon the weight of the composition (where ppm is parts-per-million by weight). In on or more embodiment, mineral oils are substantially absent from the composition.

Fillers may be present in the polyolefin compositions of the present invention. Desirable fillers include but not limited to: natural or synthetic mineral aggregates (including talc, wollastonite, and calcium carbonate), fibers (including glass fibers, carbon fibers, or polymeric fibers), carbon black, graphite, natural and synthetic clays (including nanoclays and organoclays), sand, glass beads, and any other porous or nonporous fillers and supports known in the art, utilized alone or admixed to obtain desired properties. The filler may be present at 0.1 to 50 wt%, or 1 to 40 wt%, or 2 to 30 wt%, or 5 to 20 wt%, based on the weight of the total composition. Filler content is equated with the wt% ash content as determined by the ISO 3451-1 (A) test method.

**Blending**

The polyolefin(s), PAO(s), and optional additives can be combined using any suitable means. Those skilled in the art will be able to determine the appropriate procedure to balance the need for intimate mixing with the desire for process economy. For example, one or more polyolefin component can be in the form of pellets or reactor granules, which are combined with the PAO(s) and optional additives by simple physical blending of constituent pellets and/or granules, since the forming of articles includes a (re)melting and mixing of the raw material(s). However, in some fabrication processes such as compression molding, little mixing of the raw material(s) occurs, and a pelletized melt blend would be preferred over simple physical blends of the constituent pellets and/or granules. In this case, the constituents are melt blended first, to provide a compounded product.

The polyolefin components may be in any physical form when blended with the PAO(s) and optional additives. For example, they may be in the form of reactor granules (i.e., granules of polymer that are isolated from the polymerization reactor prior to any processing procedures), or in the form of pellets that are formed from melt extrusion of the reactor granules.

The polyolefin(s), PAO(s), and optional additives can be blended by any suitable means. For example, they may be blended in a tumbler, static mixer, batch mixer, extruder, or a combination thereof that is sufficient to achieve an adequate dispersion of the components.

Preferably, the composition is prepared by combining the components in a melt-blending (compounding) step and subsequently pelletizing the blend, using either an underwater pelletizer or a strand-cut approach; these pellets are then used in a process to fabricate articles. This approach may involve an on-line "finishing" extruder associated with a polymerization unit, or it may involve an off-line "compounding" extruder dedicated to melt blending. Alternatively, the composition may be prepared by combining the components during a process used to fabricate articles, without first making a pelletized version of the composition; here, PAO is added to other components in a production extruder, such as on an injection molding machine or on a continuous extrusion line, and thereafter directly processed into a film, sheet, fiber, profile, etc. In either case, production rates may be between 5 and 3000 kg/hr.

The blending may involve "dry blending" wherein the polyolefin(s) are combined with the PAO(s) without melting. For example, one method is to contact the components in a tumbler or bowl mixer, such as a high-speed Henschel mixer. The polyolefin(s) are preferably in the form of reactor granules, but dry blending can also involve pellets. The dry blending step can then be followed, if desired, by melt blending in an extruder.

Another method of blending the components is to melt blend the polyolefin(s), either in pellet or granule form, with the PAO(s) and optional additives in a batch or internal mixer, such as a Banbury mixer.

Another method of blending the components is to melt blend the polyolefin(s), either in pellet or granule form, with the PAO(s) and optional additives in an extruder. Extrusion technology is well known in the art; see, for example, Plastics Compounding - Equipement and Processing, D.B. Todd (Hanser, 1998). Extruder melt mixing is a preferred method of blending when a high PAO loading is desired, or when large quantities of the polyolefin composition are desired.

PAO may be directly injected into the polymer melt using a liquid injection device at some point along the barrel, as in the case of a twin-screw extruder, or through an opening in a hollow screw shaft, as in the case of a single-screw extruder. PAO is preferably added downstream from the polymer melt zone, but alternatively can be added at a point where the polymer(s) have not fully melted yet. For example, in a twin-screw extruder, PAO can be injected after the first barrel section (preferably after the first third of the barrel, more preferably in the last third of the barrel). Preferably, PAO is added downstream of any filler addition. PAO addition may occur on top of conveying elements of screw, or on top of liquid mixing elements of screw, or prior to kneading elements of screw, or prior to liquid mixing elements of the screw. The extruder may have more than one (preferably two or three) PAO addition points along the barrel or screw shaft. Optionally, the PAO can be added via the extruder fed throat.

Addition of PAO is preferably by controlled metering; e.g., using a loss-in-weight feeder or a calibrated flow-rate meter. Preferably PAO delivery is via a pump such as a piston, gear, or diaphragm pump.

Preferably, the extruder is a twin-screw extruder with a length-to-diameter ratio of 20-80 and a screw diameter of 20 to 200 mm. Preferably the screw design contains liquid mixing elements (gear-type elements) that create high surface renewal of the polymer, which promotes homogenization at high fluid concentrations. Such extruders are well know in the art.

The components may also be blended by a combination of methods, such as dry blending followed by melt blending in an extruder, or batch mixing of some components followed by melt blending with other components in an extruder. One or more components may also be blended using a double-cone, ribbon, or other suitable blender, or in a Farrel Continuous Mixer (FCM).

Blending may also involve a "masterbatch" approach, where the target PAO concentration is achieved by combining neat polyolefin(s) and optional additives with an appropriate amount of pre-blended masterbatch (i.e. a blend of polymer, PAO, and optional additives that has been previously prepared at a higher concentration of PAO than desired in the final blend). This is a common practice in polymer processing; typically used for addition of color, additives, and fillers to final compositions. Dispersion (or "letdown") of the masterbatch may take place as part of a processing step used to fabricate articles, such as in the extruder on an injection molding machine or on a continuous extrusion line, or during a separate compounding step.

The components may be blended in solution by any suitable means to form the polyolefin composition, by using one or more solvents that dissolve the polyolefin and PAO components to a significant extent. The blending may occur at any temperature or pressure where the PAO and the polyolefin remain in solution. Preferred conditions include blending at high temperatures, such as 20°C or more above the melting point of the polymer. Such solution blending would be particularly useful in processes where the polymer is made by a solution process and the PAO is added directly to the finishing train, rather than added to the dry polymer in another blending step altogether. It would also be particularly useful in processes where the polymer is made in a bulk or high pressure process where the polymer and the PAO were soluble in the monomer, where the PAO may be added directly to the finishing train.

## Fabrication

The compositions of the present invention can be useful for the fabrication of shaped articles made or formed by any useful discrete molding or continuous extrusion means for forming and shaping polyolefins known in the art, including: compression molding, injection molding, co-injection molding, gas-assisted injection molding, blow molding, multi-layer blow molding, injection blow molding, stretch blow molding, extrusion blow molding, transfer molding; cast molding, rotational molding, foam molding, slush molding, transfer molding, wet lay-up or contact molding, cast molding, cold forming matched-die molding, thermoforming, vacuum forming, film blowing, film or sheet casting, sheet extrusion, profile extrusion or co-extrusion, fiber spinning, fiber spunbonding, fiber melt blowing, lamination, calendering, coating, pultrusion, protrusion, draw reduction, foaming, or other forms of processing such as described in, for example, Plastics Professing (Radian Corporation, Noyes Data Corp. 1986), or combinations thereof. Use of certain processes, such as film casting and thermoforming, allows for the possibility of benefits from uniaxial or biaxial orientation of the inventive material.

### End-Use Applications

The compositions of the present invention can be useful for consumer goods, industrial goods, construction materials, packaging materials, appliance components, electrical components, and automotive components.

Non-limiting examples of desirable articles of manufacture made from compositions of the invention include films, tapes, sheets, fibers, tubing, pipes, hoses, belts, coatings, fabrics (woven and nonwoven), tarps, agricultural barriers, packaging (durable and disposable), kitchen devices and household appliances (washing machines, refrigerators, blenders, air conditioners, etc.), furniture (indoor and outdoor, such as tables, chairs, benches, shelving, etc.), sporting equipment (skis, surfboards, skateboards, skates, boots, sleds, scooters, kayaks, paddles, etc.), solid wheels, stadium seating, amusement park rides, personal protective equipment (safety helmets, shin guards, etc.), emergency response equipment, cookware, utensils, trays, pallets, carts, tanks, tubs, pound liners, storage containers (crates, pails, jars, bottles, etc.), toys, child.car seats and booster chairs, medical devices and components (including syringe parts and catheters), luggage, tool housings (for drills, saws, etc.), wire and cable jackets, electronics housings and components (for televisions, computers, phones, hand-held devices, media players, stereos, radios, clocks, etc.), building construction materials (flooring, siding, roofing, counter tops, seals, joints, isolators, etc.), lighting, gardening equipment (handles on shovels, wheelbarrows, etc.), playground equipment, motor housings, pump housings, battery housings, instrument housings, switches, knobs, buttons, handles, pet supplies, laboratory supplies, personal hygiene devices (razors, brushes, hairdryers, etc.), cleaning supplies (brooms, dust pans, etc.), musical instrument cases, statues, trophies, artwork, costume jewelry, picture frames, eyeglass frames, plant pots, and firearm components.

Other non-limiting examples of desirable articles of manufacture made from compositions of the invention useful in vehicles (such as cars, trucks, buses, boats, all terrain vehicles, personal water craft, golf carts, snowmobiles, motorcycles, mopeds, tractors, mowers, wagons, bicycles, airplanes, helicopters, trains, military machines, gondolas, and the like) include: bumpers and bumper fascias; exterior body panels, door panels, and grills; exterior trim, including body side moldings, side cladding and molding, end caps, hoods, deck lids, mirror housings, roof racks, wheel covers, wheel liners, wheel flares, fender liners, hub caps, running boards, step pads, sill plates, air dams, splash shields, mud guards, bed liners, and rocker panels; fuel tanks; interior trim, including steering column covers, consoles, door panels, pillars, supports, knobs, buttons, handles, and safety screens; instrument panels and dash boards; knee bolsters; passenger side airbag covers; headliners; glove boxes, trays, cup holders, compartments, and lids; seat components, including backs, supports, and safety belt securing devices; under-hood applications, including battery trays and fan shrouds; electrical housings; cable bearings; and structural components, including door carriers, truck bed separators, load floors, trunk dividers, weather seals, noise and/or vibration insulation seals and mounts, disks, diaphragms, cups, joints, tubing, hoses, gaskets, o-rings, belts, mud flaps, skins, mats, boots, and bellows.

### Improved Properties of the Blends

Compositions of the present invention provide for improved permanence of the PAO modifier relative to comparable compositions made using a conventional PAO. Improved permanence is advantageous for successful long-term property retention. In certain embodiments, useful compositions exhibit a TGA Volatility that is 80%, preferably 70%, or 60%, or 50%, or 40%, or 30%, or 20%, or 10% of the TGA Volatility measured on an otherwise identical composition wherein the regularly branched PAO is replaced with an irregularly branched PAO having a KV100°C within 20%, preferably within 10%, or within 5% of that for the regularly branched PAO and a $C_{LAO}$ within 0.2, preferably within 0.1, or within 0.05 of that that for the regularly branched PAO. Measurement of TGA Volatility is described in the Experimental Methods section.

Compositions of the present invention provide for lower glass transition temperatures relative to comparable compositions made using a conventional PAO. A lower $T_g$ is advantageous for improved low temperature flexibility and toughness. In certain embodiments, useful compositions exhibit a $T_g$ that is 2°C, preferably 3°C, or 4°C, or 5°C, or 6°C, or 8°C, or 10°C less than the $T_g$ measured on an otherwise identical composition wherein the regularly branched PAO is replaced with an irregularly branched PAO having a KV100°C within 20%, preferably within 10%, or within 5% of that for the regularly branched PAO and a $C_{LAO}$ within 0.2, preferably within 0.1, or within 0.05 of that that for the regularly branched PAO.

Certain embodiments of the present invention can be characterized in that the glass transition temperature (Tg) of the composition decreases by at least 1°C more (preferably 2°C more, or 3°C more, or 4°C more, or 5°C more, or 6°C more, or 8°C more, or 10°C more in other embodiments), for every 10 wt%, 20 wt% or 30 wt% of regularly branched PAO present in the composition, than the $T_g$ decrease measured on an otherwise identical composition wherein the regularly branched PAO is replaced with an irregularly branched PAO having a KV100°C within 20%, preferably within 10%, or within 5% of that for the regularly branched PAO and a $C_{LAO}$ within 0.2, preferably within 0.1, or within 0.05 of that that for the regularly branched PAO.

Compositions of the present invention provide for lower melt viscosity relative to comparable compositions made using a conventional PAO. A lower melt viscosity (e.g., MI or MFR) is advantageous for improved low temperature flexibility and toughness. In certain embodiments, useful compositions exhibit a MI that is 90%, preferably 80%, or 70%, or 60%, or 50% of the MI measured on an otherwise identical composition wherein the regularly branched PAO is replaced with an irregularly branched PAO having a KV100°C within 20%, preferably within 10%, or within 5% of that for the regularly branched PAO and a $C_{LAO}$ within 0.2, preferably within 0.1, or within 0.05 of that that for the regularly branched PAO. In other embodiments, useful compositions exhibit a MFR that is 90%, preferably 80%, or 70%, or 60%, or 50% of the MFR measured on an otherwise identical composition wherein the regularly branched PAO is replaced with an irregularly branched PAO having a KV100°C within 20%, preferably within 10%, or within 5% of that for the regularly branched PAO and a $C_{LAO}$ within 0.2, preferably within 0.1, or within 0.05 of that that for the regularly branched PAO.

### EXPERIMENTAL METHODS

For purpose of this invention and the claims herein, unless otherwise noted, physical and chemical properties described are measured using the following test methods.

| *General Methods* | |
|---|---|
| Kinematic Viscosity (KV) | ASTM D 445 |
| Viscosity Index (VI) | ASTM D 2270 |
| Pour Point | ASTM D 97 |
| Specific Gravity and Density | ASTM D 4052 (15.6/15.6 °C) |
| Flash Point | ASTM D 92 |
| Glass Transition Temperature ($T_g$) | ASTM E 1356 (10°C/min, midpoint) |
| Melt Index (MI) | ASTM D 1238 (190°C/2.16 kg) |
| Melt Flow Rate (MFR) | ASTM D 1238 (230°C/2.16 kg) |
| Mooney Viscosity | ASTM D 1646 |
| Density | ASTM D 1505 |
| Injection Molding | ASTM D 4101 |
| Tensile Properties | ASTM D 638 (Type I bar, 5 cm/min) |
| 1% Secant Flexural Modulus | ASTM D 790 (A, 1.3 mm/min) |
| Heat Deflection Temperature | ASTM D 648 (0.45 MPa) |
| Vicat Softening Temperature | ASTM D 1525 (200 g) |
| Gardner Impact Strength | ASTM D 5420 (GC) |
| Notched Izod (NI) Impact Strength | ASTM D 256 (Method A, or Method E if "reverse notch" noted, RNI) |
| Notched Charpy Impact Strength | ASTM D 6110 |
| Multi-Axial Impact Strength | ASTM D 3763 (15 MPH) |
| Shore (Durometer) Hardness | ASTM D 2240 (A or D, 15 sec delay) |

**PAO Properties**

The number-average molecular weight ($M_n$) is determined by one of two methods. For samples having KV100°C of 10 cSt or less, Gas Chromatography (GC) with a mass spectrometer detector is used. Suitable GC methods are generally described in Modern Practice of Gas Chromatography, 3rd Ed., R.L. Grob and E.F. Barry (Wiley-Interscience, 1995). For samples having KV100°C of more than 10 cSt, Gel Permeation Chromatography (GPC) is used and "poly-styrene-equivalent" $M_n$ values are reported. Suitable GPC methods involving a DRI detector are generally described in Modern Size Exclusion Liquid Chromatographs, W.W. Yan, J.J. Kirkland, and D.D. Bly (J. Wiley & Sons, 1979) and ASTM D 3593.

The Branching Irregularity Index (BII), as defined previously, is determined by $^{13}$C NMR spectroscopy. The following protocol, or one materially equivalent, can be used to calculate the relative concentrations of $B_1$, $B_2$, and $B_{3+}$ branches. (These concentrations represent molar averages over the whole PAO sample, and are determined from the spectral integrals for peak associated with each branch length category.) The PAO sample is dissolved in chloroform-d with chromium acetylacetonate added at 7.5 mg/mL to accelerate data acquisition. $^{13}$C NMR data is acquired on a 400 MHz spectrometer using a 5 mm autotune probe. Spectra are acquired for 8000 scans at a temperature of 50°C with inverse gated decoupling (no NOE enhancement), a 90° tip angle, a 5.1-second pulse-to-pulse delay, 64K complex points, digital filtering, and a 310 ppm sweep width. To analyze the spectra, integral ranges are selected that correspond to peak positions as assigned in the following table, where $C_1$ indicates methyl branches, $C_2$ indicates ethyl branches, and $C_{3+}$ indicates branches 3 carbons or more in length. Although there are some known errors in these assignments (e.g. propyl branch methylene peaks appear in the 22-14.5 ppm region), they will not affect the BII significantly.

| Branch type | Peak position range (chemical shift in ppm) |
|---|---|
| olefins | 160 - 105 |
| $C_1$ | 22 - 14.5 |
| $C_2$ | 13 - 7 |
| $C_{3+}$ | 14.5 - 13 |

It is assumed that vinylidene and vinyl olefins, if present, will each contribute one methyl group upon complete saturation. All the olefins are lumped into an aggregate integral, which is divided by 2 to account for the fact that there are 2 carbons per olefin, and then this result is included as an additional contribution to [$C_1$] in the numerator of the BII calculation.

**Polyolefin Composition Properties**

Dynamic Mechanical Thermal Analysis (DMTA) provides information on the small-strain mechanical response of a sample as a function of temperature. Appropriate DMTA instrumentation is readily available from several commercial vendors. Samples are tested in a three point bending configuration at a frequency of 1 Hz and amplitude of 20 micron, from -130 to 100°C at 2°C/min. The output is the storage modulus (E') and loss modulus (E"). Tan-delta is the ratio of E"/E' and gives a measure of the damping characteristics of the material. The glass transition temperature ($T_g$) is reported as the peak temperature for the so-called beta relaxation mode. The use of DMTA to determine $T_g$ is well known in the art.

Differential Scanning Calorimetry (DSC) is used to measure crystallization temperature ($T_c$) and melting temperature ($T_m$). Appropriate DSC instrumentation is readily available from several commercial vendors. Typically, 2 to 10 mg of a sample is sealed in an aluminum pan and loaded into the DSC at room temperature. Melting data (first heat) is acquired by heating the sample to at least 30°C above its melting temperature at a heating rate of 10°C/min. The sample is held for at least 5 minutes at this temperature to destroy its thermal history. Crystallization data is acquired by cooling the sample from the melt to at least 50°C below the crystallization temperature at a cooling rate of 20°C/min. The sample is held at this temperature for 5 minutes, and then heated at 10°C/min to acquire additional melting data (second heat). The endothermic melting transition (first and second heat) and exothermic crystallization transition are analyzed for peak temperatures; $T_m$ is reported as the peak melting temperature from the second heat unless otherwise specified. For polymers displaying multiple peaks, $T_m$ is defined to be the peak melting temperature associated with the largest endothermic response; likewise, $T_c$ is defined to be the peak crystallization temperature associated with the largest exothermic response. The total peak area associated with endothermic response (on the second heat, unless noted otherwise) is the heat of fusion, $H_m$, which is used to calculate the degree of crystallinity (in weight percent) by [$H_m$ (in J/g) / H° (in J/g)] $\times$ 100, where H° is the ideal heat of fusion for the homopolymer of the major monomer component. A value of 300 J/g is used for H° of polyethylene, and 200 J/g is used for H° of polypropylene. For a blend of polymer and plasticizer,

the value of $H_m$ based on the weight of the polymer alone is indicated by $H_{m,polym}$; i.e., $H_{m,polym} = 100 \times (H_m / w_{polym})$ where $w_{polym}$ = wt% polymer in the blend. The use of DSC to determine $T_m$, $T_c$, and $H_f$ is well known in the art.

The non-isothermal crystallization half time ($t_{1/2}$) is also measured using a DSC. The sample is first melted to remove thermal history, then cooled at a rate of 10°C/min. The crystallization half-time is the time required for half of the final crystallinity to develop, as measured by the total peak area associate with the full exothermic response, $H_c$; that is, if $H_c$ = X J/g, then $t_{1/2}$ is the time required for the cumulative exothermic response to reach X/2 J/g.

Size-Exclusion Chromatography (SEC) is used to measure the weight-average molecular weight ($M_w$), number-average molecular weight ($M_n$), and molecular weight distribution ($M_w / M_n$) of polymers. Appropriate SEC instrumentation is readily available from several commercial vendors. The following experimental conditions are employed: differential refractive index (DRI) detector; column set of 3 Polymer Laboratories PLgel 10mm Mixed-B columns; flow rate of 0.5 mL/min; injection volume of 300 $\mu$L; carrier solvent of 1,2,4-trichlorobenzene (TCB) containing 1.5 g/L of butylated hydroxy toluene. The columns, DRI detector, and transfer lines are contained in a 135°C oven. The carrier solvent is filtered online through a 0.7 $\mu$m glass pre-filter then a 0.1 $\mu$m Teflon filter, and degassed with an online degasser. Polymer solutions are prepared by placing dry polymer in a glass container, adding the desired amount of TCB, then heating the mixture at 160°C with continuous agitation for about 2 hours. All quantities are measured gravimetrically. The injection concentration ranges from 1.0 to 2.0 mg/ml, with lower concentrations being used for higher molecular weight sample (the density of TCB is taken to be 1.324 g/ml). Prior to running a set of samples, the DRI detector and the injector are purged, the flow rate increased to 0.5 ml/minute, and the DRI allowed to stabilize for 8-9 hours. The relative concentration of polymer at each point in the chromatogram (i.e., the plot of DRI signal as a function of elution volume) is calculated from the baseline-subtracted DRI signal. The molecular weight associated with a given elution volume is determined by calibrating the column set using known narrow MWD polystyrene standards, run under identical experimental conditions. Commercially available SEC analysis software is used to calculate $M_n$ and $M_w$ from the chromatogram using this "polystyrene" calibration curve. This approach yields the "polystyrene-equivalent" $M_n$ and $M_w$ values, which are used herein.

Polymer microstructure can be determined by $^{13}$C NMR spectroscopy, including the concentration of isotactic and syndiotactic diads ([m] and [r]), triads ([mm] and [rr]), and pentads ([mmmm] and [rrrr]). Samples are dissolved in $d_2$-1,1,2,2-tetrachloroethane. Spectra are recorded at 125°C using a 100 MHz NMR. Polymer resonance peaks are referenced to mmmm = 21.8 ppm. Calculations follow the work of F. A. Bovey in Polymer Confirmation and Configuration (Academic Press, 1969) and J. Randall in Polymer Sequence Determination, 13C NMR Method (Academic Press, 1977). Peak assignments are based on H. N. Cheng and J. A. Ewen, Makromol. Chem. 190, p. 1931 (1989).

## Permanence

Permanence of the PAO or blend of PAOs can be determined following a modified version of ASTM D 1203, by measuring the weight loss from the plasticized composition in the form of a 0.25 mm thick sheet, after 300 hours in dry 70°C oven. Permanence is 100% minus the Corrected %wt loss, where Corrected %wt loss = (%wt loss for the blend composition) - (%wt loss for the base composition under the same test conditions), and %wt loss = $100(W-W_o)/W_o$, where W = weight after drying and $W_o$ = weight before drying. The base composition is the same composition as the plasticized composition but without PAO added (i.e., other components are present in the same ratio to each other).

Another method to assess permanence is the TGA Weight Loss. This is calculated using a commercially available thermogravimetric analysis (TGA) instrument which is essentially a sensitive balance with a controlled temperature chamber. The sample is rapidly heated to 200°C and held there for 120 min under 20 mL/min nitrogen gas flow, at which point the weight loss (in wt%) is noted. The Corrected TGA Wt Loss (in wt%, also identified as the "TGA Volatility") is calculated by subtracted the wt% loss measured for the base polymer, prorated for the amount of base polymer in the polymer/PAO blend, from the wt% loss measured for the polymer/PAO blend.

## PAO Content

In the absence of knowledge of the specific formulation of the plasticized composition, the PAO content (wt% basis) in the composition can be determined by Soxhlet extraction in refluxing n-heptane for 16 hours. Preferably, the base composition is subjected to the same analysis, since low molecular weight material can be present in both compositions that is soluble in the extraction solvent; the PAO content is then more accurately determined by correcting the extractables level for the plasticized composition by that for the base composition. The presence of PAO in the extract can be verified by traditional gas chromatography methods using mass-spectrometer detection.

## EXAMPLES

PAOs and polyolefins used in the Examples are described in Tables 1 and 2, respectively. "cPAO" indicates an irregularly branched, conventional PAO with high BII. "rbPAO" indicates a regularly branched PAO with low BII. "LAOs" indicates the carbon number of the LAO(s) used in the synthesis of the PAO (e.g., 10 indicates 1-decene was used and 6/12 indicates a blend of 1-hexene and 1-dodecene was used). "$C_{LAO}$" indicates the molar-average carbon number of the LAO(s) incorporated into the PAO.

The cPAOs are commercially available from ExxonMobil Chemical as SpectraSyn™ grades. The polyolefins are also commercially available from ExxonMobil Chemical.

The rbPAOs were synthesized using metallocene catalyst systems. Some of the reaction components are abbreviated as follows:

**metA** rac-dimethylsilylbis(tetrahydroindenyl)zirconium dimethyl
**metB** rac-dimehtylsilylbis(tetrahydroindenyl)zirconium dichloride
**metC** bis(tetra-methylcyclopentadienyl)zirconium dichloride
**metD** rac-bis(indenyl) hafnium dimethyl
**NCA** N,N-dimethylanilinium tetra(pentafluorophenyl)borate
**MAO** methylaluminoxane
**TNOA** tri-n-octyl aluminum
**TIBA** tri-isobutyl aluminum

rbPAO-1 through rbPAO-6 were synthesized from 1-decene in a continuous solution-phase process. The 1-decene and toluene were purified through 5 Å molecular sieve. A catalyst solution was prepared by pre-mixing equal molar of metA and NCA in toluene solution to give 0.8 micromole catalyst per ml of solution. The synthesis was performed using a dual-reactor system comprising two stainless steel 1-liter autoclave reactors arranged in series. The catalyst solution, a TNOA solution, and purified 1-decene were continuously pumped into the first reactor at the reaction temperature; both reactors were controlled at the same temperature. Reaction product was continuously withdrawn from the second reactor, quenched, and washed with water. The organic layer was further distilled at high temperature to remove any dimer and lighter components. The rbPAO was then hydrogenated using 1 wt% Ni-on-Kieselguhr catalyst at 200°C, 800 psi (5.5MPa) hydrogen pressure for 4 hours. The reaction conditions are summarized in the Table 3.

rbPAO-7 to rbPAO-16 were synthesized from a single LAO or a blend of LAOs in a batch solution-phase process. The LAO feedstock was purified by one of two ways: 1) mixing 1 L of LAO(s) with 20 g of activated 13X molecular sieve and 10 g of de-oxygenate catalyst (a reduced copper catalyst) for at least two drays inside a glove box, then subsequently removing the molecular sieve and de-oxygenate catalyst by filtration; or 2) by pumping a stream of the LAO(s) through a bed of activated 13X molecular sieve, optionally followed by a bed of de-oxygenated catalyst, directly into the reactor. Thus treated LAOs were used alone or combined to give the desirable composition as feed. The reaction was conducted in an autoclave reactor under $N_2$ atmosphere. Reaction details are described below and in Table 4. Following a reaction time of ~20 hours, the reaction was discontinued by addition of 3 ml isopropanol, followed by washing with 120 ml 5% sodium hydroxide solution and water. The isolated organic layer was distilled at 160°C and 1 millitorr vacuum for two hours to remove the light ends. More details on the synthesis of these rbPAOs can be found in WO 2007/011973, WO 2007/011832, WO 2007/011459, and WO 2007/011462.

Synthesis of rbPAO-13 to rbPAO-16 involved charging 100 g of treated LAO feedstock, 13 g of a toluene solution containing 20 mg **of TIBA** per g of solution, and 1.72 g of a solution containing 1 mg **of metB** per g of solution into a reactor maintained at constant reaction temperature. A solution containing ~20 g toluene and 3.20 g of a toluene solution containing 1 mg of **NCA** per g of toluene was added to the reactor while stirring. Synthesis of rbPAO-10 to rbPAO-12 was similar, except **metC** was used instead of **metB**.

Synthesis of rbPAO-9 involved charging 90 g of treated LAO feedstock into the reactor and heating to reaction temperature, followed by the addition of a catalyst solution containing 1.854 mg of **metB**, 0.858 g of 10 wt% **MAO** in toluene, and 29 g of toluene. Synthesis of rbPAO-7 and rbPAO-8 was similar, except the catalyst solution charged to the reactor contained 2.0 mg **metD**, 3.84 mg of **NCA**, and 0.1 g of **TNOA** in 20 g toluene solvent, and 30 psi $H_2$ was fed to the reactor.

**Table 1**

| PAO | KV100° C, cSt | VI | Pour Point, °C | $M_w/M_n$ | BII | LAOs | Avg $C_{LAO}$ |
|---|---|---|---|---|---|---|---|
| cPAO-1 | 10 | 136 | -54 | ~1.1 | 0.42 | $C_{10}$ | 10 |
| cPAO-2 | 39 | 148 | -39 | ~1.6 | 0.43 | $C_{10}$ | 10 |
| cPAO-3 | 105 | 170 | -33 | ~2.5 | 0.79 | $C_{10}$ | 10 |
| rbPAO-1 | 11 | 150 | -57 | 1.1 | 0.20 | $C_{10}$ | 10 |

(continued)

| PAO | KV100° C, cSt | VI | Pour Point, °C | $M_w/M_n$ | BII | LAOs | Avg $C_{LAO}$ |
|---|---|---|---|---|---|---|---|
| rbPAO-2 | 15 | 155 | | 1.2 | 0.16 | $C_{10}$ | 10 |
| rbPAO-3 | 27 | 169 | -48 | 1.3 | 0.11 | $C_{10}$ | 10 |
| rbPAO-4 | 79 | 197 | -33 | 1.5 | 0.07 | $C_{10}$ | 10 |
| rbPAO-5 | 169 | 225 | -30 | 1.7 | 0.05 | $C_{10}$ | 10 |
| rbPAO-6 | 295 | 249 | -30 | 1.8 | 0.03 | $C_{10}$ | 10 |
| rbPAO-7 | 41 | 179 | | | 0.14 | $C_{10}$ | 10 |
| rbPAO-8 | 106 | 205 | | | 0.13 | $C_{10}$ | 10 |
| rbPAO-9 | 24 | 112 | -42 | | | $C_6$ | 6 |
| rbPAO-10 | 12 | 153 | < -60 | | | $C_8$ | 8 |
| rbPAO-11 | 12 | 161 | < -60 | | 0.24 | $C_{10}$ | 10 |
| rbPAO-12 | 9 | 172 | -24 | | | $C_{12}$ | 12 |
| rbPAO-13 | 16 | 144 | -54 | | | $C_6/C_{12}$ | 8.55 |
| rbPAO-14 | 14 | 133 | -36 | 1.3 | | $C_6/C_{14}$ | 7.75 |
| rbPAO-15 | 14 | 150 | -18 | | | $C_6/C_{14}$ | 10 |
| rbPAO-16 | 13 | 150 | -33 | | | $C_6/C_{12}/C_{14}$ | 10 |

**Table 2**

| Polyolefin | | MFR, dg/min | density, g/cm$^3$ |
|---|---|---|---|
| hPP | PP 3155 | 36 | 0.9 |
| SPE | Vistamaxx™ 6100 | 3 | 0.855 |

**Table 3**

| rbPAO- | 1 | 2 | 3 | 4 | 5 | 6 | |
|---|---|---|---|---|---|---|---|
| Rxn Temp (°C) | 100 | 90 | 80 | 70 | 60 | 50 | |
| 1-decene (ml/min) | 40 | 40 | 40 | 40 | 40 | 40 | |
| Cat rate (mol/min) | 3.73E-06 | 3.73E-06 | 3.73E-06 | 3.73E-06 | 2.39E-06 | 2.39E-06 | |
| TNOA (mol/min) | 9.10E-10 | 9.10E-10 | 9.10E-10 | 9.10E-10 | 7.57E-10 | 7.57E-10 | |

**Table 4**

| rbPAO- | 7 | 8 | 9 | 10 | 11 | 12 | 13 | 14 | 15 | 16 |
|---|---|---|---|---|---|---|---|---|---|---|
| Rxn Temp (°C) | 160 | 140 | 70 | 70 | 70 | 70 | 100 | 100 | 100 | 100 |
| 1-hexene (wt%) | -- | -- | 100 | -- | -- | -- | 40.4 | 60.5 | 30.0 | 24.0 |
| 1-octene (wt%) | -- | -- | -- | 100 | -- | -- | -- | -- | -- | -- |
| 1-decene (wt%) | 100 | 100 | -- | -- | 100 | -- | -- | -- | -- | -- |
| 1-dodecene (wt%) | -- | -- | -- | -- | -- | 100 | 59.6 | -- | -- | 48.0 |
| 1-tetradecene (wt%) | -- | -- | -- | -- | -- | -- | -- | 39.5 | 70.0 | 28.0 |

**Examples 1-5**

Examples 1-5 are described in Table 5. For these blends, cPAO-1 and rbPAO-1, which have similar KV at 100°C, were added at a loading level of 10 or 20 wt% to a base polyolefin resin consisting of two immiscible polyolefins: a homopolymer polypropylene (hPP) and a specialty propylene-ethylene elastomer (SPE). Use of an immiscible blend allowed simultaneous investigation of the effect of PAO on the glass transition of both polyolefin components.

The blends were prepared in a Brabender batch mixer (40 g scale) at 190°C. The hPP and SPE pellets were combined and melted in the mixer at 60 RPM for 1 min, then the PAO was added slowly to prevent pooling in the melted polymer. The blend was further mixed for 5 min under a nitrogen purge, then removed and allowed to cool. Plaques were prepared by compression molding in a controlled-temperature press following a protocol of first preheating at 350°F (177°C) under minimal pressure for 5 min, then applying 25 tons force for 6 minutes, followed by controlled cooling at 27°F/min (15°C/min) to room temperature. Specimens for testing were die-cut from these plaques. Physical properties were evaluated using the methods described in the Experimental Methods section. $T_{g1}$ and $T_{g2}$ are associated with hPP and SPE, respectively.

**Table 5**

| Example | 1 | 2 | 3 | 4 | 5 |
|---|---|---|---|---|---|
| hPP, wt% | 67 | 60 | 60 | 54 | 54 |
| SPE, wt% | 33 | 30 | 30 | 26 | 26 |
| cPAO-1, wt% | -- | 10 | -- | 20 | -- |
| rbPAO-1, wt% | -- | -- | 10 | -- | 20 |
| MFR, dg/min | 12 | 21 | 21 | 33 | 36 |
| $T_m$, second heat, °C | 161 | 160 | 160 | 160 | 159 |
| $H_{m,polym}$, J/g | 60 | 61 | 60 | 62 | 64 |
| $T_c$, °C | 114 | 113 | 114 | 110 | 112 |
| $t_{1/2}$, min | 11.5 | 11.7 | 11.5 | 11.9 | 11.7 |
| $T_{g1}$, °C | -27 | -36 | -37 | -43 | -47 |
| $T_{g2}$, °C | 2 | -6 | -7 | -12 | -21 |
| E' @-40°C, x$10^9$ Pa | 2.61 | 2.00 | 1.66 | 1.54 | 0.93 |
| E' @ -20°C, x$10^9$ Pa | 1.58 | 1.06 | 0.90 | 0.85 | 0.53 |
| E' @ 0°C, x$10^9$ Pa | 1.02 | 0.64 | 0.57 | 0.51 | 0.34 |
| E' @ 25°C, x$10^9$ Pa | 0.57 | 0.40 | 0.36 | 0.34 | 0.24 |
| Hardness, Shore D | 53 | 51 | 51 | 35 | 42 |
| TGA Weight Loss, % | 0.15 | 0.47 | 0.30 | 0.77 | 0.29 |
| Corrected TGA Wt Loss, % | -- | 0.34 | 0.17 | 0.65 | 0.17 |

At a loading level of 10 wt%, the plasticization effect of rbPAO-1 is comparable to that of cPAO-1. However, at a loading level of 20 wt%, rbPAO-1 is a recognizably better plasticizer, as evidenced by larger $T_g$ depressions for both hPP (19 vs 16°C) and SPE (23 vs 14°C). Moreover, the rbPAO-1 is more permanent than cPAO-1 in the blends, as evidenced by lower emission rates; after correcting for weight loss attributable to the neat polymer blend, more than 4 times as much cPAO-1 is lost than rbPAO-1 at the 20 wt% initial loading level (~3% of the cPAO-1 is lost vs <1% of the rbPAO-1).

Differences in the effects, if any, of rbPAO-1 vs cPAO-1 on MFR, $T_m$, $T_c$, $t_{1/2}$, $H_{m,polym}$, and hardness are small. Nevertheless, the modest differences that do exist favor rbPAO-1 over cPAO-1. For example, addition of rbPAO-1 gives slightly higher $T_c$ and shorter $t_{1/2}$ than does addition of cPAO-1, indicating slightly improved crystallization behavior. Also, rbPAO-1 gives lower E' values (indicating softer, tougher blends) at all temperatures, compared to cPAO-1.

**Examples 6-18**

Examples 6-18 are described in Tables 6 and 7. hPP/PAO blends were prepared in a Brabender batch mixer at 190°C. The hPP was first melted using a rotor speed of 60 rpm while about 0.1 wt% (based on hPP weight) of Irganox 2215 was added to minimize thermal degradation. PAO was then added slowly to prevent pooling in the molten polymer, with the mixing speed slowed to about 30 rpm. Mixing was continued for 5 min once all the fluid was incorporated in the blend. Finally the blend was discharged from the mixer and allowed to cool. Blends were compression-molded into 15 cm × 15 cm × 3 mm plaques using a press at about 212°C, a molding time of 6 min, and a press force of 25 tons. Immediately thereafter, the heat was switched off and the plaques slowly cooled in the press under pressure for about 15 min. Specimens for testing were die-cut from these plaques. Physical properties were evaluated using the methods described in the Experimental Methods section.

**Table 6**

| Example | 6 | 7 | 8 | 9 | 10 | 11 | 12 | 13 | 14 | 15 |
|---|---|---|---|---|---|---|---|---|---|---|
| hPP, wt% | 100 | 95 | 95 | 95 | 95 | 95 | 95 | 95 | 95 | 95 |
| cPAO-1, wt% | -- | 5 | -- | -- | -- | -- | -- | -- | -- | -- |
| rbPAO-9, wt% | -- | -- | 5 | -- | -- | -- | -- | -- | -- | -- |
| rbPAO-10, wt% | -- | -- | -- | 5 | -- | -- | -- | -- | -- | -- |
| rbPAO-11, wt% | -- | -- | -- | -- | 5 | -- | -- | -- | -- | -- |
| rbPAO-12, wt% | -- | -- | -- | -- | -- | 5 | -- | -- | -- | -- |
| rbPAO-13, wt% | -- | -- | - | -- | -- | -- | 5 | -- | -- | -- |
| rbPAO-14, wt% | -- | -- | -- | - | -- | -- | -- | 5 | -- | -- |
| rbPAO-15, wt% | -- | -- | -- | -- | -- | -- | -- | -- | 5 | -- |
| rbPAO-16, wt% | -- | -- | -- | -- | -- | -- | -- | -- | -- | 5 |
| MFR, dg/min | 45 | 67 | 61 | 58 | 65 | | 59 | 57 | 68 | 60 |
| $T_m$, °C | 161 | 160 | 161 | 160 | 160 | 160 | 164 | 162 | 161 | 160 |
| $T_c$, °C | 115 | 114 | 114 | 114 | 114 | 113 | 112 | 113 | 113 | 114 |
| 1% Sec Flex Mod, kpsi | 257 | 206 | 210 | 196 | 201 | 191 | 188 | 203 | 197 | 198 |
| Vicat, °C | 154 | 152 | 152 | 152 | 152 | 152 | 152 | 152 | 152 | 152 |
| NI @ 23°C, ft-lb/in | 0.2 | 0.2 | 0.3 | 0.2 | 0.3 | 0.2 | 0.2 | 0.3 | 0.3 | 0.3 |
| RNI @ -18°C, ft-lb/in | 1.7 | 1.3 | 1.8 | 1.6 | 1.6 | 1.1 | 1.7 | 2.0 | 1.7 | 1.4 |
| Hardness, Shore D | 61 | 61 | 60 | 61 | 57 | 59 | 63 | 61 | 58 | 57 |

**Table 7**

| Example | 16 | 17 | 18 |
|---|---|---|---|
| hPP, wt% | 95 | 95 | 95 |
| rbPAO-11, wt% | 5 | -- | -- |
| rbPAO-7, wt% | -- | 5 | -- |
| rbPAO-8, wt% | -- | -- | 5 |
| TGA Weight Loss, % | 1.4 | 0.6 | 0.6 |

As expected, addition of 5 wt% PAO increases MFR, decreases Flexural Modulus, and causes negligible changes in melting/crystallization behavior, Vicat, and Hardness. However, there is a surprising detrimental effect of cPAO on Notched Izod impact strength, which is largely absent or even reversed with rbPAO.

**Claims**

1. A polyolefin composition comprising;

    a) 60 to 99 wt% of one or more polyolefin polymers and
    b) 1 to 40 wt% of a regularly branched PAO ("rbPAO") based on the total weight of the polyolefin polymer(s) and the rbPAO,
    wherein the rbPAO comprises oligomers of one or more $C_2$ to $C_{20}$ alpha-olefins said rbPAO having:

    i) a kinematic viscosity at 100°C ("KV100°C") of 3 to 3000 cSt;
    ii) a Branching Irregularity Index ("BII") of 0.40 or less, where BII = $([C_1]+[C_2])/[C_3+]$, where $[C_1]$ is the aggregate concentration of any vinylidene and vinyl olefins present divided by 2 plus the concentration of methyl branches, $[C_2]$ is the concentration of ethyl branches, $[C_{3+}]$ is the concentration of propyl and longer branches in the PAO, as determined by $^{13}$C NMR, relative to the molar concentration over all PAO molecules in a sample;
    iii) a molar-average carbon number ("$C_{LAO}$") of the alpha-olefin of 6 to 14; and
    iv) a Mw/Mn of less than $\{0.525 + 0.625[\log(KV100°C)]\}$, where KV100°C is measured in cSt, provided that the $M_w/M_n$ of the rbPAO is also less than 2.3.

2. The polyolefin composition of claim 1 wherein the composition has a TGA Volatility of less than 95% of the TGA Volatility for an otherwise identical polyolefin composition wherein the rbPAO is replaced with an irregularly branched PAO having a BII greater than 0.40, a KV100°C within 10% of the KV100°C of the rbPAO, and a $C_{LAO}$ within 0.2 of the $C_{LAO}$ of the rbPAO.

3. The polyolefin composition of claim 1 wherein the glass transition temperature ($T_g$) of the composition decreases by at least 1°C more, for every 10 wt% of PAO in the composition, than the $T_g$ decrease measured on an otherwise identical composition wherein the rbPAO is replaced with an irregularly branched PAO having a BII greater than 0.40, a kinematic viscosity at 100°C within 10% of the kinematic viscosity of the rbPAO, and a $C_{LAO}$ within 0.2 of the $C_{LAO}$ of the rbPAO.

4. The composition of any of claims 1-3 wherein the one or more polyolefin polymers comprises polyethylene or polypropylene.

5. The composition of any of claims 1-4 wherein the one or more polyolefin polymers comprises a propylene homopolymer or a copolymer of propylene and ethylene.

6. The composition of any of claims 1-5 wherein the one or more polyolefin polymers comprises an EP elastomer.

7. The composition of any of claims 1-6 wherein the rbPAO has a KV100°C of 6 to 150 cSt, and or a pour point of less than -30°C and/ or a viscosity index of at least 150.

8. The composition of any of claims 1-7 wherein the rbPAO has a KV100°C of less than 150 cSt and a pour point (°C) of less than $\left\{-75 + 22\log(KV100°C) - \dfrac{125}{(KV100°C)^{1.6}}\right\}$ where KV100°C is measured in cSt.

9. The composition of any of claims 1-8 wherein the rbPAO has a KV100°C of less than 150 cSt and a $T_g$ (°C) of less than $\left\{-72 - \dfrac{120}{KV100°C}\right\}$ where KV100°C is measured in cSt.

10. The composition of any of claims 1-9 wherein the rbPAO has a KV100°C of less than 150 cSt and a VI of greater than $\{105(KV100°C)^{0.13}\}$ where KV100°C is measured in cSt.

11. The composition of any of claims 1-10 wherein the rbPAO comprises oligomers of at least two $C_6$ to $C_{14}$ alpha-olefins.

**12.** The composition of any of claims 1-11 wherein the rbPAO is a blend of two or more rbPAOs where the ratio of the highest KV100 °C to the lowest KV100°C is at least 1.5.

**13.** The composition of any of claims 1-12 wherein the rbPAO has a BII of 0.35 or less.

**14.** The composition of any of the claims 1-13 wherein the rbPAO is prepared using a single site coordination catalyst.

**15.** The composition of any of the claims 1-14 wherein the rbPAO is prepared using a metallocene catalyst and has at least 50% meso triads.

**16.** An article of manufacture comprising a polyolefin composition of any of claims 1-15.

**Patentansprüche**

**1.** Polyolefinzusammensetzung, umfassend:

a) 60 bis 99 Gew.-% von einem oder mehreren Polyolefinpolymeren und
b) 1 bis 40 Gew.-% von einem regelmäßig verzweigten PAO ("rbPAO"), bezogen auf das Gesamtgewicht des Polyolefinpolymers bzw. der Polyolefinpolymere und dem rbPAO, wobei das rbPAO Oligomere von einem oder mehreren $C_2$- bis $C_{20}$-alpha-Olefinen umfasst, wobei das rbPAO

i) eine kinematische Viskosität bei 100°C ("KV100°C") von 3 bis 3000 cSt aufweist,
ii) einen Verzweigungsunregelmäßigkeitsindex ("BII") von 0,40 oder weniger aufweist, wobei BII = $([C_1] + [C_2]) / [C_{3+}]$ ist, wobei $[C_1]$ die Aggregatkonzentration von jedem vorhandenen Vinyliden- und Vinylolefin geteilt durch 2 plus der Konzentration der Methylverzweigungen ist, $[C_2]$ die Konzentration der Ethylverzweigungen ist, $[C_{3+}]$ die Konzentration von Propyl- und längeren Verzweigungen in dem PAO, bestimmt mittels $^{13}C$-NMR, relativ zur molaren Konzentration gegenüber allen PAO-Molekülen in einer Probe ist,
iii) eine molgemittelte Kohlenstoffanzahl ("$C_{LAO}$") des alpha-Olefins von 6 bis 14 aufweist und
iv) ein Mw/Mn von weniger als $\{0,525 + 0,625[\log(KV100°C)]\}$ aufweist, wobei KV100°C in cSt gemessen ist, unter der Voraussetzung, dass Mw/Mn des rbPAO weniger als 2,3 beträgt.

**2.** Polyolefinzusammensetzung nach Anspruch 1, wobei die Zusammensetzung eine TGA-Volatilität von weniger als 95% der TGA-Volatilität einer ansonsten identischen Polyolefinzusammensetzung aufweist, in der das rbPAO durch ein unregelmäßig verzweigtes PAO mit einem BII von mehr als 0,40, einer KV100°C innerhalb von 10% der KV100°C des rbPAO und einer $C_{LAO}$ innerhalb von 0,2 der $C_{LAO}$ des rbPAO ersetzt ist.

**3.** Polyolefinzusammensetzung nach Anspruch 1, wobei die Glasübergangstemperatur ($T_g$) der Zusammensetzung für jede 10 Gew.-% des PAO in der Zusammensetzung um mindestens 1°C mehr abnimmt, als die $T_g$, die für eine ansonsten identische Zusammensetzung bestimmt wird, in der das rbPAO durch ein unregelmäßig verzweigtes PAO mit einem BII von mehr als 0,40, einer kinematischen Viskosität bei 100°C innerhalb von 10% der kinematischen Viskosität des rbPAO und einer $C_{LAO}$ innerhalb von 0,2 der $C_{LAO}$ des rbPAO ersetzt ist.

**4.** Zusammensetzung nach einem der Ansprüche 1-3, wobei das eine oder die mehreren Polyolefinpolymere Polyethylen oder Polypropylen umfassen.

**5.** Zusammensetzung nach einem der Ansprüche 1-4, wobei das eine oder die mehreren Polyolefinpolymere ein Propylenhomopolymer oder ein Copolymer aus Propylen und Ethylen umfassen.

**6.** Zusammensetzung nach einem der Ansprüche 1-5, wobei das eine oder die mehreren Polyolefinpolymere ein EP-Elastomer umfassen.

**7.** Zusammensetzung nach einem der Ansprüche 1-6, wobei das rbPAO eine KV100°C von 6 bis 150 cSt und/oder einen Stockpunkt von weniger als -30°C und/oder einen Viskositätsindex von mindestens 150 aufweist.

**8.** Zusammensetzung nach einem der Ansprüche 1-7, wobei das rbPAO eine KV100°C von weniger als 150 mm$^2$/s

und einen Stockpunkt (°C) von weniger als $\left\{-75 + 22\log(KV100°C) - \dfrac{125}{(KV100°C)^{1,6}}\right\}$ aufweist, wobei KV100°C in cSt bestimmt ist.

9. Zusammensetzung nach einem der Ansprüche 1-8, wobei das rbPAO eine KV100°C von weniger als 150 mm$^2$/s und eine T$_g$ (°C) von weniger als $\left\{-72 - \dfrac{120}{(KV100°C)}\right\}$ aufweist, wobei KV100°C in cSt bestimmt ist.

10. Zusammensetzung nach einem der Ansprüche 1-9, wobei das rbPAO eine KV100°C von weniger als 150 mm$^2$/s und einen VI von mehr als $\{105\,(KV100°C)^{0,13}\}$ aufweist, wobei KV100°C in cSt bestimmt ist.

11. Zusammensetzung nach einem der Ansprüche 1-10, wobei das rbPAO Oligomere von mindestens zwei C$_6$- bis C$_{14}$-alpha-Olefinen umfasst.

12. Zusammensetzung nach einem der Ansprüche 1-11, wobei das rbPAO ein Gemisch aus zwei oder mehr rbPAOs ist, wobei das Verhältnis der höchsten KV100°C zu der geringsten KV100°C mindestens 1,5 beträgt.

13. Zusammensetzung nach einem der Ansprüche 1-12, wobei das rbPAO einen BII von 0,35 oder weniger aufweist.

14. Zusammensetzung nach einem der Ansprüche 1-13, wobei das rbPAO hergestellt wird, indem ein Single-Site-Koordinationskatalysator verwendet wird.

15. Zusammensetzung nach einem der Ansprüche 1-14, wobei das rbPAO unter Verwendung eines Metallocenkatalysators hergestellt wird und mindestens 50% meso-Triaden aufweist.

16. Hergestellter Artikel, der eine Polyolefinzusammensetzung gemäß einem der Ansprüche 1-15 umfasst.

## Revendications

1. Composition polyoléfinique comprenant :

   a) 60 à 99 % en poids d'un ou plusieurs polymères polyoléfiniques et
   b) 1 à 40 % en poids d'une PAO à ramification régulière (« rbPAO »)
   sur la base du poids total du/des polymère(s) polyoléfinique(s) et de la rbPAO,
   la rbPAO comprenant des oligomères d'une ou plusieurs alpha-oléfines en C$_2$ à C$_{20}$, ladite rbPAO ayant :

   i) une viscosité cinématique à 100 °C (« KV100°C ») de 3 à 3000 cSt ;
   ii) un indice d'irrégularité de ramification (« BII ») de 0,40 ou moins, où BII = ([C$_1$]+[C$_2$])/[C$_{3+}$], où [C$_1$] est la concentration cumulée de toutes les oléfines de vinylidène et vinyliques présentes divisée par 2 plus la concentration de ramifications méthyle, [C$_2$] est la concentration de ramifications éthyle, [C$_{3+}$] est la concentration de ramifications propyle et plus longues dans la PAO, telles que déterminées par RMN $^{13}$C, relativement à la concentration molaire sur toutes les molécules de PAO dans un échantillon ;
   iii) un nombre de carbones moyen en moles (« C$_{LAO}$ ») de l'alpha-oléfine de 6 à 14 ; et
   iv) un rapport Mw/Mn inférieur à $\{0{,}525 + 0{,}625[\log(KV100°C)]\}$, où KV100°C est mesurée en cSt, à condition que le rapport Mw/Mn de la rbPAO soit aussi inférieur à 2,3.

2. Composition polyoléfinique de la revendication 1, la composition ayant une volatilité TGA inférieure à 95 % de la volatilité TGA d'une autre composition polyoléfinique par ailleurs identique dans laquelle la rbPAO est remplacée par une PAO à ramification irrégulière ayant un BII supérieur à 0,40, une KV100°C ne différant pas de plus de 10 % de la KV100°C de la rbPAO, et un C$_{LAO}$ ne différant pas de plus de 0,2 du C$_{LAO}$ de la rbPAO.

3. Composition polyoléfinique de la revendication 1, la température de transition vitreuse (T$_g$) de la composition diminuant d'au moins 1 °C de plus, pour tous les 10 % en poids de PAO dans la composition, que la diminution de T$_g$ mesurée sur une composition par ailleurs identique dans laquelle la rbPAO est remplacée par une PAO à ramification irrégulière ayant un BII supérieur à 0,40, une viscosité cinématique à 100 °C ne différant pas de plus de 10 % de la viscosité cinématique de la rbPAO, et un C$_{LAO}$ ne différant pas de plus de 0,2 du C$_{LAO}$ de la rbPAO.

**4.** Composition de l'une quelconque des revendications 1 à 3 dans laquelle le ou les polymères polyoléfiniques comprennent du polyéthylène ou du polypropylène.

**5.** Composition de l'une quelconque des revendications 1 à 4 dans laquelle le ou les polymères polyoléfiniques comprennent un homopolymère de propylène ou un copolymère de propylène et d'éthylène.

**6.** Composition de l'une quelconque des revendications 1 à 5 dans laquelle le ou les polymères polyoléfiniques comprennent un élastomère EP.

**7.** Composition de l'une quelconque des revendications 1 à 6 dans laquelle la rbPAO a une KV100°C de 6 à 150 cSt, et/ou un point d'écoulement inférieur à -30 °C et/ou un indice de viscosité d'au moins 150.

**8.** Composition de l'une quelconque des revendications 1 à 7 dans laquelle la rbPAO a une KV100°C inférieure à 150 cSt et un point d'écoulement (°C) inférieur à $\left\{-75 + 22\log(KV100°C) - \dfrac{125}{(KV100°C)^{1,6}}\right\}$ où KV100°C est mesurée en cSt.

**9.** Composition de l'une quelconque des revendications 1 à 8 dans laquelle la rbPAO a une KV100°C inférieure à 150 cSt et une $T_g$ (°C) inférieure à $\left\{-72 - \dfrac{120}{KV100°C}\right\}$ où KV100°C est mesurée en cSt.

**10.** Composition de l'une quelconque des revendications 1 à 9 dans laquelle la rbPAO a une KV100°C inférieure à 150 cSt et un VI supérieur à $\{105(KV100°C)^{0,13}\}$ où KV100°C est mesurée en cSt.

**11.** Composition de l'une quelconque des revendications 1 à 10 dans laquelle la rbPAO comprend des oligomères d'au moins deux alpha-oléfines en $C_6$ à $C_{14}$.

**12.** Composition de l'une quelconque des revendications 1 à 11 dans laquelle la rbPAO est un mélange d'au moins deux rbPAO où le rapport entre la KV100°C la plus forte et la KV100°C la plus faible est d'au moins 1,5.

**13.** Composition de l'une quelconque des revendications 1 à 12 dans laquelle la rbPAO a un BII de 0,35 ou moins.

**14.** Composition de l'une quelconque des revendications 1 à 13 dans laquelle la rbPAO est préparée en utilisant un catalyseur de coordination monosite.

**15.** Composition de l'une quelconque des revendications 1 à 14 dans laquelle la rbPAO est préparée en utilisant un catalyseur métallocène et a au moins 50 % de mésotriades.

**16.** Article manufacturé comprenant une composition polyoléfinique de l'une quelconque des revendications 1 à 15.

## Figure 1

## Figure 2

Kinematic Viscosity at 100°C (cSt)

## Figure 3

*conventional PAOs with irregular branching (BII > 0.4)*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4960820 A
- US 4132698 A
- US 3201364 A
- WO 0231044 A
- WO 0118109 A
- EP 0300689 A
- US 2004054040 A
- WO 2004014997 A
- US 2004106723 A
- WO 2004014998 A
- US 4536537 A
- WO 980440411 A
- WO 2002018487 A
- WO 2003048252 A
- US 4645791 A
- JP 7292167 A
- EP 0315363 A
- WO 2002031044 A
- JP 56095938 A
- US 6639020 B
- US 6916882 B
- US 4365105 A

- US 4436948 A
- US 3149178 A
- US 4827064 A
- US 4827073 A
- US 5171908 A
- US 5783531 A
- WO 200711459 A
- WO 200711462 A
- WO 200711973 A
- US 6858767 B, Uniroyal
- EP 1442104 A
- US 7129306 B, Crompton
- WO 03040201 A
- WO 03040095 A
- WO 03040202 A
- WO 03040233 A
- WO 03040442 A
- WO 2007011973 A
- WO 2007011832 A
- WO 2007011459 A
- WO 2007011462 A

### Non-patent literature cited in the description

- Synthetic Lubricants and High-Performance Functional Fluiils. Marcel Dekker, Inc, 1999, 3-52
- *European Polymer Journal,* 2005, vol. 41, 2909
- ZIEGLER CATALYSTS. Springer-Verlag, 1995
- METALLOCENE-BASED POLYOLEFINS. Wiley & Sons, 2000
- Plastics Additive Handbook. 2001
- **D.B. TODD.** Plastics Compounding - Equipement and Processing. Hanser, 1998
- Plastics Professing. Radian Corporation, Noyes Data Corp, 1986

- **R.L. GROB ; E.F. BARRY.** Modern Practice of Gas Chromatography. Wiley-Interscience, 1995
- **W.W. YAN ; J.J. KIRKLAND ; D.D. BLY.** Modern Size Exclusion Liquid Chromatographs. J. Wiley & Sons, 1979
- **F. A. BOVEY.** Polymer Confirmation and Configuration. Academic Press, 1969
- **J. RANDALL.** Polymer Sequence Determination, C NMR Method. Academic Press, 1977
- **H. N. CHENG ; J. A. EWEN.** *Makromol. Chem.,* 1989, vol. 190, 1931